# EUROPEAN PATENT APPLICATION

(11) **EP 3 598 064 A1**
(43) Date of publication of application: **22.01.2020**
(21) Application number: 18786993.8
(22) Date of filing: 29.03.2018
(51) Int. Cl.: G01B 11/26, G01B 11/00

(54) **MARKER UNIT**

(30) Priority: 19.04.2017 JP 2017082435; 31.07.2017 JP 2017148305
(71) Applicant: Enplas Corporation, Kawaguchi-shi, Saitama 332-0034 (JP)
(72) Inventor: SAITO Tomohiro, Kawaguchi-shi Saitama 332-0034 (JP); FUKUDA Yasuyuki, Kawaguchi-shi Saitama 332-0034 (JP)
(74) Representative: J A Kemp LLP
(86) International application number: PCT/JP2018/013157
(87) International publication number: WO 2018/193806

(57) **Abstract**

The present invention provides a marker unit which can be easily installed in the same target object under the same condition, for example. The marker unit of the present invention includes: an upper substrate; and a lower substrate, wherein the upper substrate is laminated on the lower substrate to form a laminate, the lower substrate has a lower substrate detection target portion exposed to an upper surface side of the laminate on an upper surface thereof, the lower substrate has a positioning portion on a lower surface thereof, the detection target portion is detectable from an upper surface side of the laminate, and the positioning portion has a shape that determines a position with respect to an installation target portion of an installation target object in which the marker unit is to be installed.

## Description

### TECHNICAL FIELD

The present invention relates to a marker unit.

### BACKGROUND ART

In the fields of augmented reality (also referred to as "AR" hereinafter), robotics, etc., a so-called visual marker is used to recognize the position, the orientation, and the like of an object. As the marker, for example, an AR marker is commonly used. As another example of the marker, for example, a marker that includes a lenticular lens arranged on a black stripe pattern has been reported (Patent Literature 1). The marker is commonly referred to as a variable moiré pattern (VMP) marker that is displaced depending on the viewing angle and is also referred to as a rotation angle scale (RAS) marker. When an image appearing on the marker is detected by a detection device such as a camera, the color gradation pattern of the image changes depending on the viewing angle of the camera with respect to the marker. Thus, the rotation angle of the marker can be determined by detecting the color gradation pattern of the marker.

The visual marker is usually provided on a substrate. On the substrate, a plurality of detection reference portions serving as marks of regions to be detected by the camera are provided, and such a substrate with the detection reference portions as a whole is used as a marker unit.

### Citation List

### Patent Literature

Patent Literature 1: JP 2012-145559 A

### SUMMARY OF INVENTION

### Technical Problem

When the marker unit is installed in a target object such as a robot, the marker unit is generally attached by a double-sided tape. The marker unit may need to be replaced when it gets dirty or it goes out of order, or may need to be removed after measurement, for example. Then, a new marker unit needs to be installed in the same target object at the time of the next measurement.

With the current state of the art, positioning of the marker unit with respect to the target object is performed visually. However, the marker and the detection reference portion in the marker unit differ in appearance depending on positions and angles. Therefore, when there is a need to install the marker unit in the target object, remove the marker unit from the target object, and replace the marker unit with the same type of marker unit, or the like every time the measurement is performed, the installation accuracy of the marker unit is important. That is, even if the marker unit is the same or replaced with the same type of marker unit, if the installation in the target object differs each time, the result obtained from the marker unit may differ even if the measurement is performed under the same condition. Then, every time the marker unit is installed, calibration or the like is required so that the measurement result of the marker unit installed last time and the measurement result of the marker unit installed next time can correspond to each other, which takes time and labor.

With the foregoing in mind, it is an object of the present invention to provide a marker unit which can be easily installed in the same target object under the same installation condition, for example.

### Solution to Problem

In order to achieve the above object, the present invention provides a marker unit including: an upper substrate; and a lower substrate, wherein the upper substrate is laminated on the lower substrate to form a laminate, the lower substrate has a lower substrate detection target portion exposed to an upper surface side of the laminate on an upper surface thereof, the lower substrate has a positioning portion on a lower surface thereof, the detection target portion is detectable from an upper surface side of the laminate, and the positioning portion has a shape that determines a position with respect to an installation target portion of an installation target object in which the marker unit is to be installed.

### Advantageous Effects of Invention

Since the marker unit of the present invention has the positioning portion as described above, the marker unit easily can be installed in an installation target object such as a robot or the like under the same installation condition. Thus, for example, calibration for the measurement of the detection reference portion, the marker, or the like in the marker unit can be omitted every time a marker unit is installed in the installation target object.

### BRIEF DESCRIPTION OF DRAWINGS

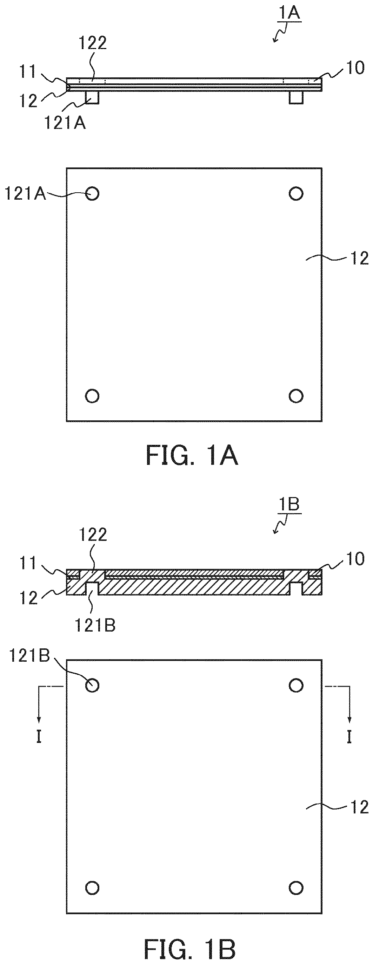

[FIGs. 1A and 1B] In FIG. 1A, the upper drawing is a side view showing an exemplary marker unit according to Embodiment 1 and the lower drawing is a plan view of the marker unit viewed from below. In FIG. 1B, the upper drawing is a cross-sectional view showing an exemplary marker unit according to Embodiment 1 and the lower drawing is a plan view of the marker unit viewed from below.

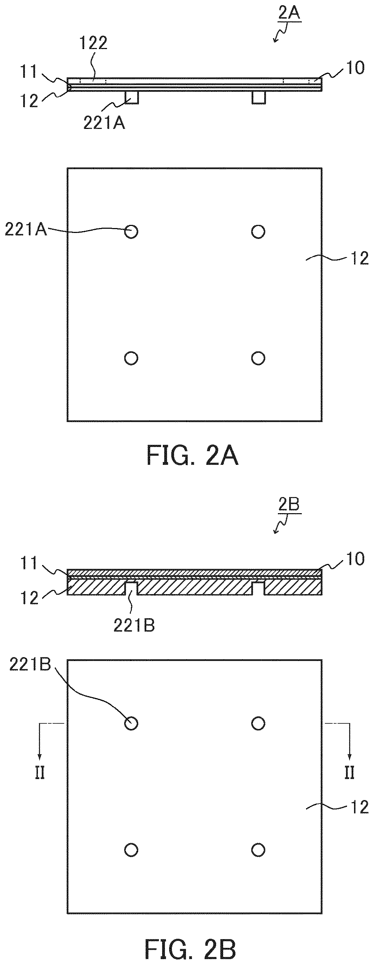

[FIGs. 2A and 2B] In FIG. 2A, the upper drawing is a side view showing an exemplary marker unit according to Embodiment 2 and the lower drawing is a plan view of the marker unit viewed from below. In FIG. 2B, the upper drawing is a cross-sectional view showing an exemplary marker unit according to Embodiment 2 and the lower drawing is a plan view of the marker unit viewed from below.

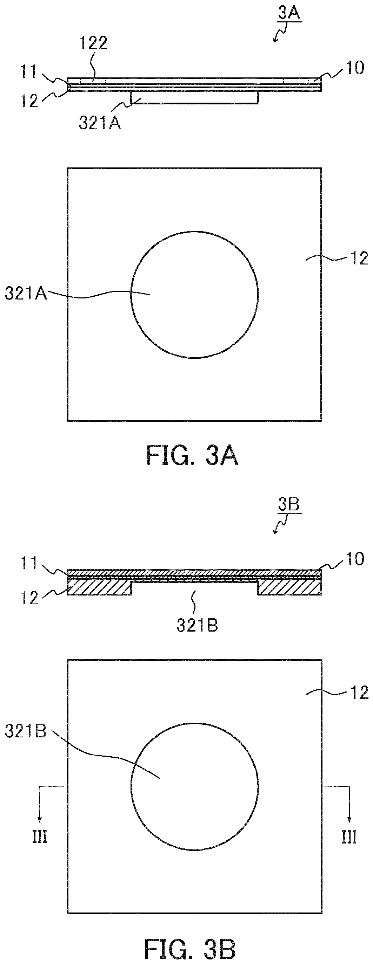

[FIGs. 3A and 3B] In FIG. 3A, the upper drawing is a side view showing an exemplary marker unit according to Embodiment 3 and the lower drawing is a plan view of the marker unit viewed from below. In FIG. 3B, the upper drawing is a cross-sectional view showing an exemplary marker unit according to Embodiment 3 and the lower drawing is a plan view of the marker unit viewed from below.

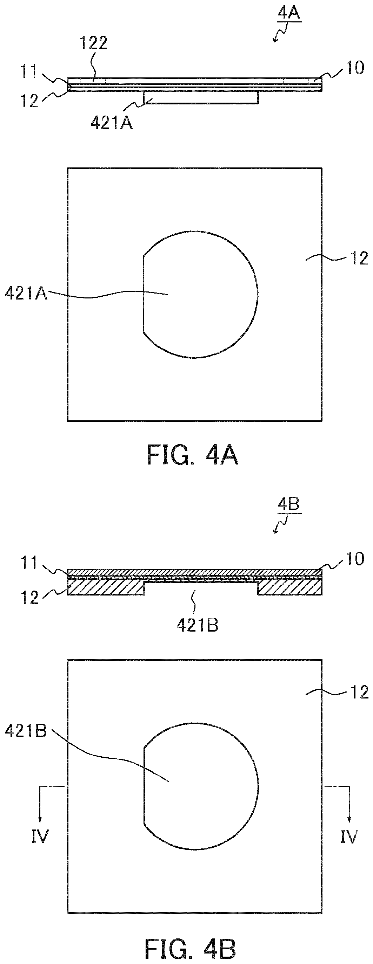

[FIGs. 4A and 4B] In FIG. 4A, the upper drawing is a side view showing an exemplary marker unit according to Embodiment 4 and the lower drawing is a plan view of the marker unit viewed from below. In FIG. 4B, the upper drawing is a cross-sectional view showing an exemplary marker unit according to Embodiment 4 and the lower drawing is a plan view of the marker unit viewed from below.

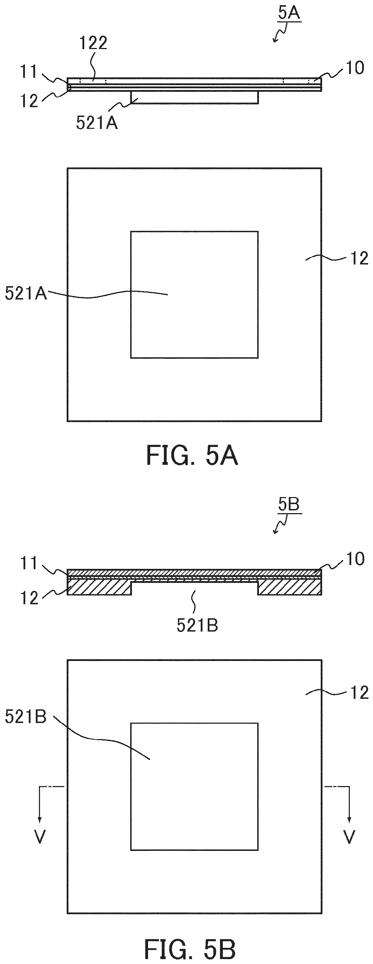

[FIGs. 5A and 5B] In FIG. 5A, the upper drawing is a side view showing an exemplary marker unit according to Embodiment 5 and the lower drawing is a plan view of the marker unit viewed from below. In FIG. 5B, the upper drawing is a cross-sectional view showing an exemplary marker unit according to Embodiment 5 and the lower drawing is a plan view of the marker unit viewed from below.

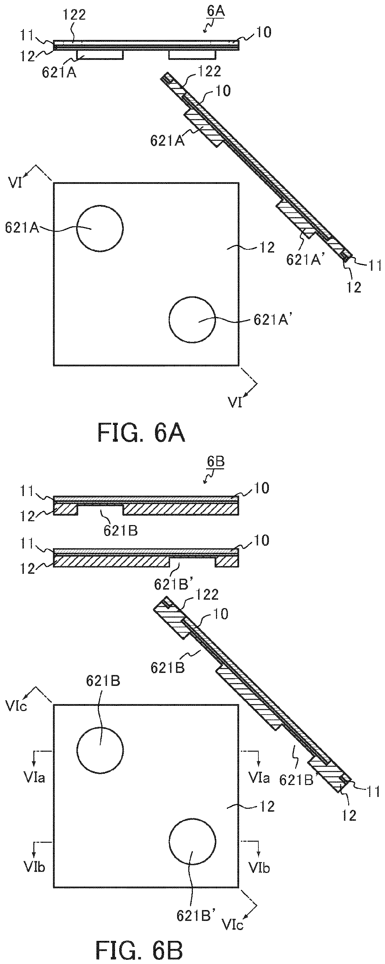

[FIGs. 6A and 6B] In FIG. 6A, the upper drawing is a side view showing an exemplary marker unit according to Embodiment 6, the middle drawing is a cross-sectional view of the marker unit, and the lower drawing is a plan view of the marker unit viewed from below. In FIG. 6B, the upper two drawings and the middle drawing are cross-sectional views each showing an exemplary marker unit according to Embodiment 6 and the lower drawing is a plan view of the marker unit viewed from below.

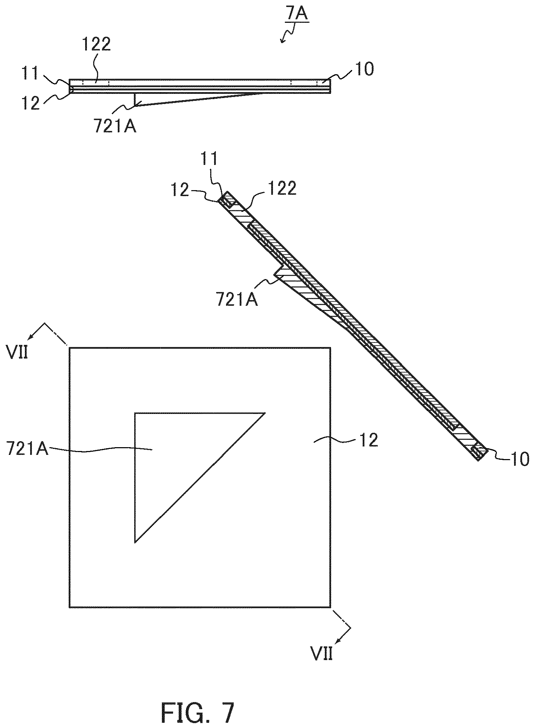

[FIG. 7] In FIG. 7, the upper drawing is a side view showing an exemplary marker unit according to Embodiment 7, the middle drawing is a cross-sectional view of the marker unit, and the lower drawing is a plan view of the marker unit viewed from below.

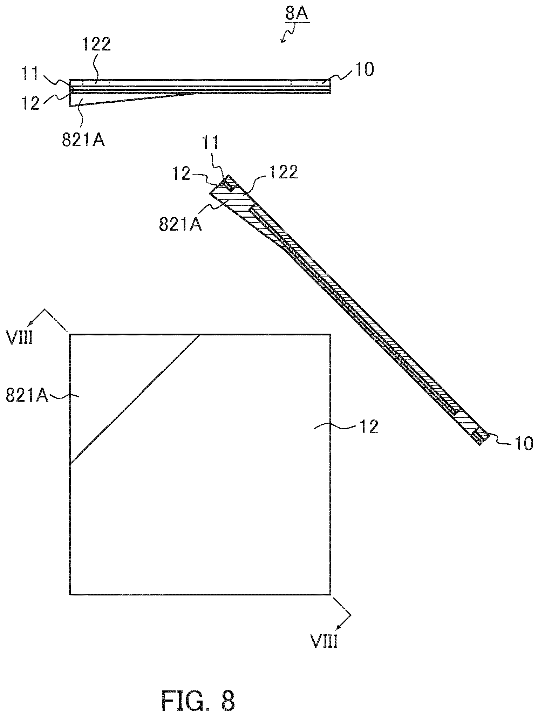

[FIG. 8] In FIG. 8, the upper drawing is a side view showing an exemplary marker unit according to Embodiment 8, the middle drawing is a cross-sectional view of the marker unit, and the lower drawing is a plan view of the marker unit viewed from below.

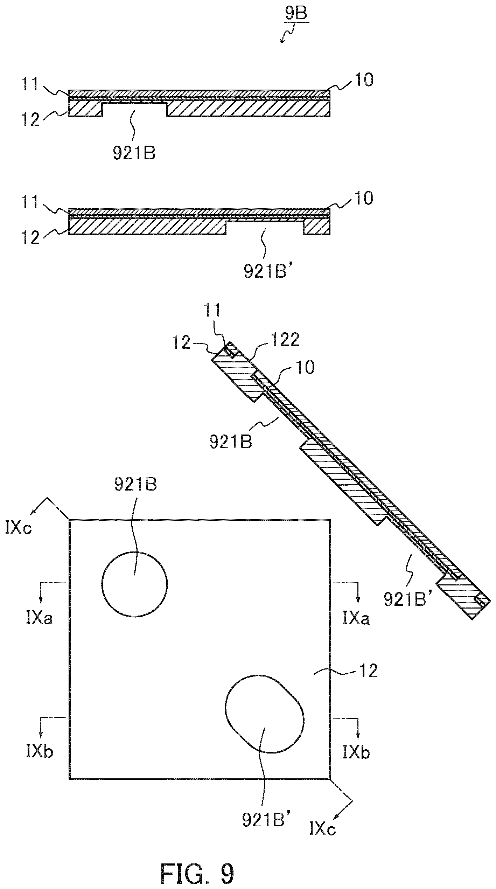

[FIG. 9] In FIG. 9, the upper two drawings and the middle drawing are cross-sectional views each showing an exemplary marker unit according to Embodiment 9 and the lower drawing is a plan view of the marker unit viewed from below.

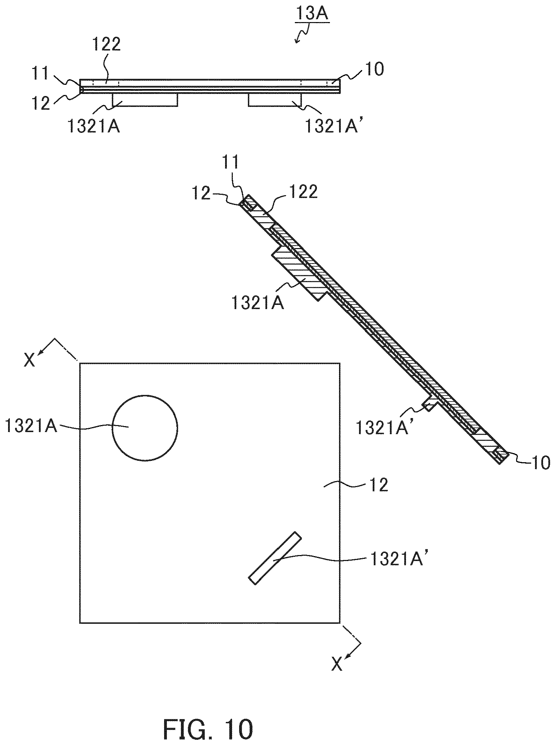

[FIG. 10] In FIG. 10, the upper drawing is a side view showing an exemplary marker unit according to Embodiment 10, the middle drawing is a cross-sectional view of the marker unit, and the lower drawing is a plan view of the marker unit viewed from below.

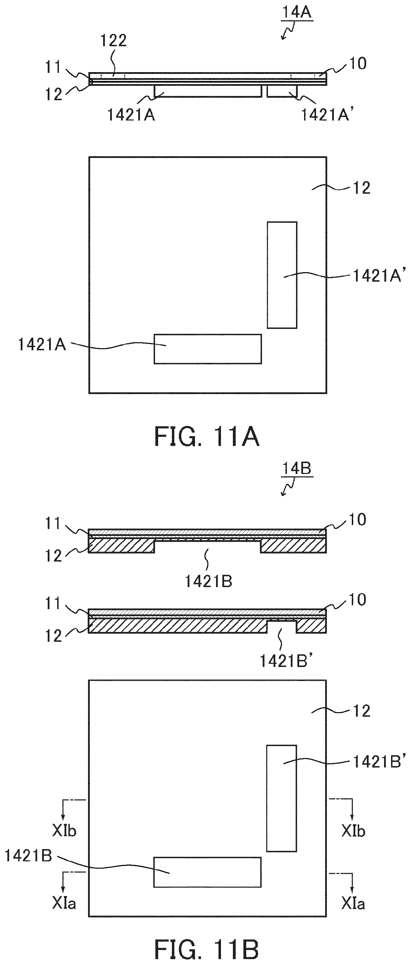

[FIGs. 11A and 11B] In FIG. 11A, the upper drawing is a side view showing an exemplary marker unit according to Embodiment 11 and the lower drawing is a plan view of the marker unit viewed from below. In FIG. 11B, the upper two drawings are cross-sectional views each showing an exemplary marker unit according to Embodiment 11 and the lower drawing is a plan view of the marker unit viewed from below.

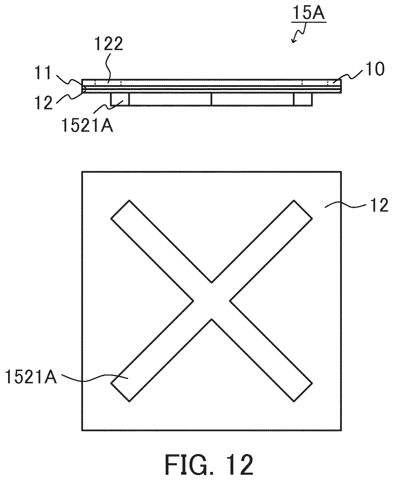

[FIG. 12] In FIG. 12, the upper drawing is a side view showing an exemplary marker unit according to Embodiment 12 and the lower drawing is a plan view of the marker unit viewed from below.

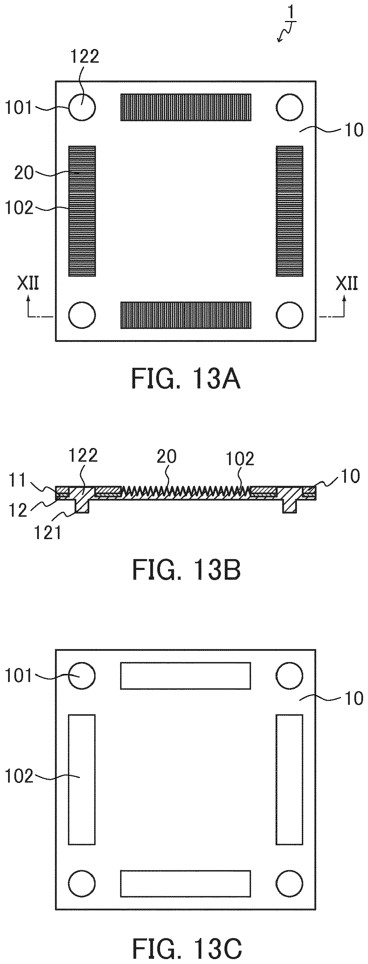

[FIGs. 13A to 13C] FIGs. 13A to 13C each show an exemplary basic configuration of the marker unit of the embodiments, FIG. 13A is a plan view of the marker unit viewed from above, FIG. 13B is a cross-sectional view of the marker unit, and FIG. 13C is a plan view of the upper substrate of the marker unit.

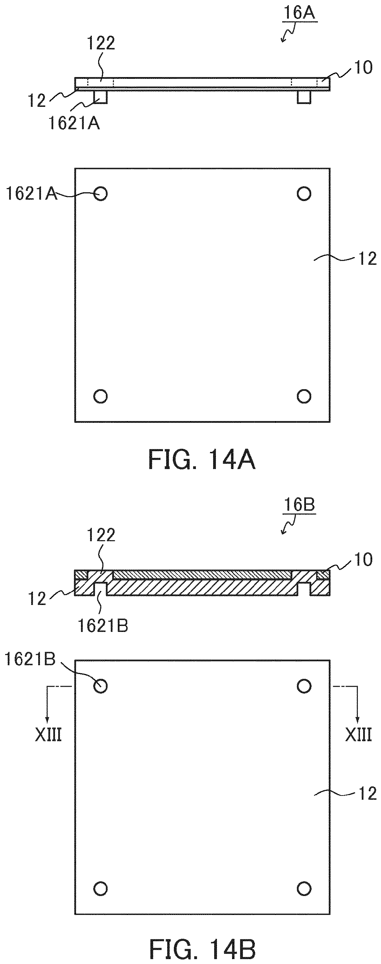

[FIGs. 14A and 14B] In FIG. 14A, the upper drawing is a side view showing an exemplary variation of a marker unit and the lower drawing is a plan view of the marker unit viewed from below. In FIG. 14B, the upper drawing is a cross-sectional view showing an exemplary variation of a marker unit and the lower drawing is a plan view of the marker unit viewed from below.

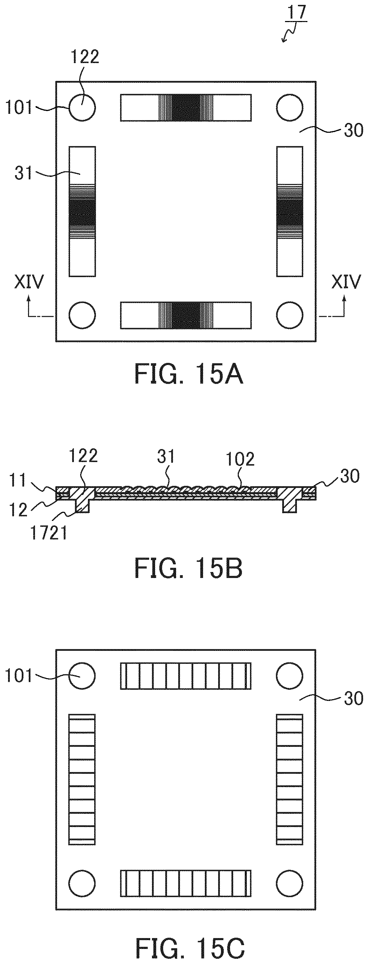

[FIGs. 15A to 15C] FIG. 15A is a plan view of a variation of a marker unit viewed from above, FIG. 15B is a cross-sectional view of the marker unit, and FIG. 15C is a plan view of the upper substrate of the marker unit.

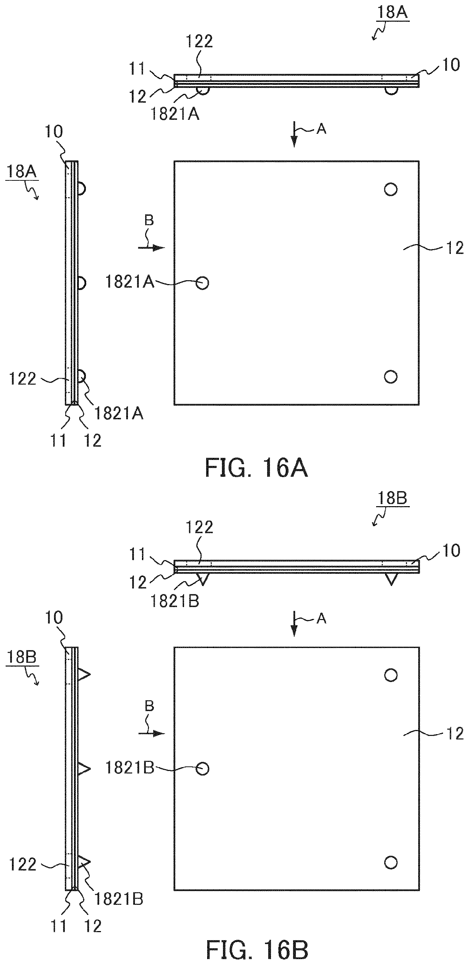

[FIGs. 16A and 16B] In FIG. 16A, the lower right drawing is a plan view showing an exemplary marker unit according to Embodiment 13, the upper right drawing is a side view of the marker unit viewed in the direction of the arrow A, and the lower left drawing is a side view of the marker unit viewed in the direction of the arrow B. In FIG. 16B, the lower right drawing is a plan view showing an exemplary marker unit according to Embodiment 13, the upper right drawing is a side view of the marker unit viewed in the direction of the arrow A, and the lower left drawing is a side view of the marker unit viewed in the direction of the arrow B.

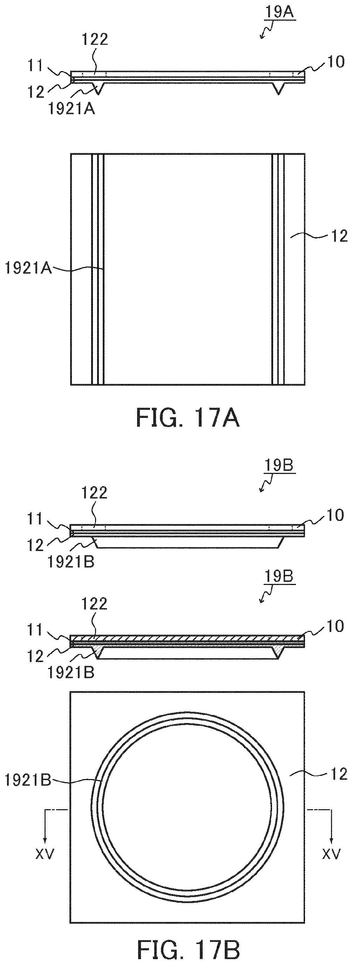

[FIGs. 17A and 17B] In FIG. 17A, the upper drawing is a side view showing an exemplary marker unit according to Embodiment 14 and the lower drawing is a plan view of the marker unit viewed from below. In FIG. 17B, the upper drawing is a side view of the marker unit according to Embodiment 14, the middle drawing is a cross-sectional view of the marker unit, and the lower drawing is a plan view of the marker unit viewed from below.

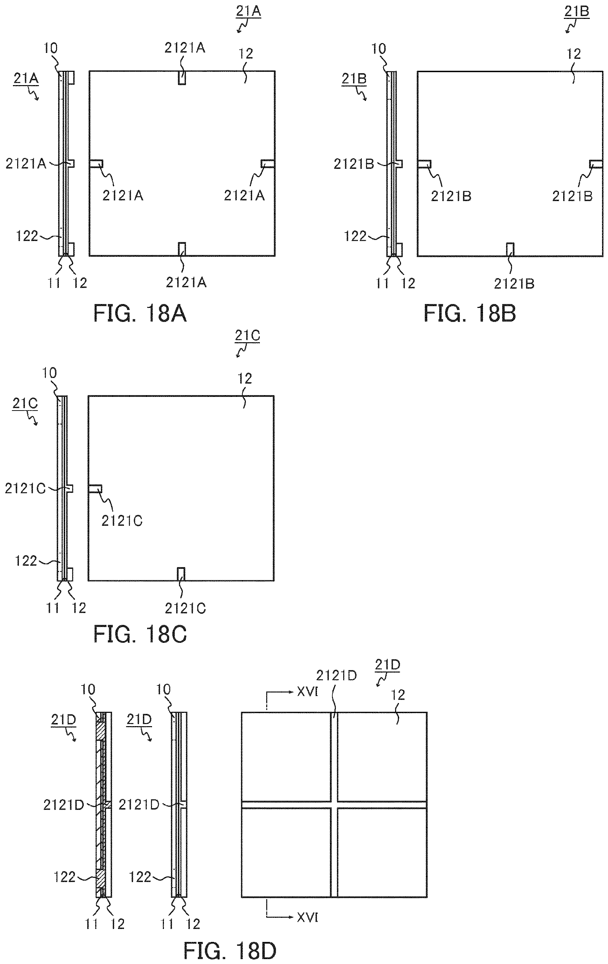

[FIGs. 18A to 18D] In FIG. 18A, the left drawing is a side view showing an exemplary marker unit according to Embodiment 15 and the right drawing is a plan view of the marker unit viewed from below. In FIG. 18B, the left drawing is a side view showing an exemplary marker unit according to Embodiment 15 and the right drawing is a plan view viewed from below. In FIG. 18C, the left drawing is a side view showing an exemplary marker unit according to Embodiment 15 and the right drawing is a plan view of the marker unit viewed from below. In FIG. 18D, the left drawing is a cross-sectional view of an exemplary marker unit according to Embodiment 15, the right drawing is a plan view of the marker unit viewed from below, and the middle drawing is a side view of the marker unit.

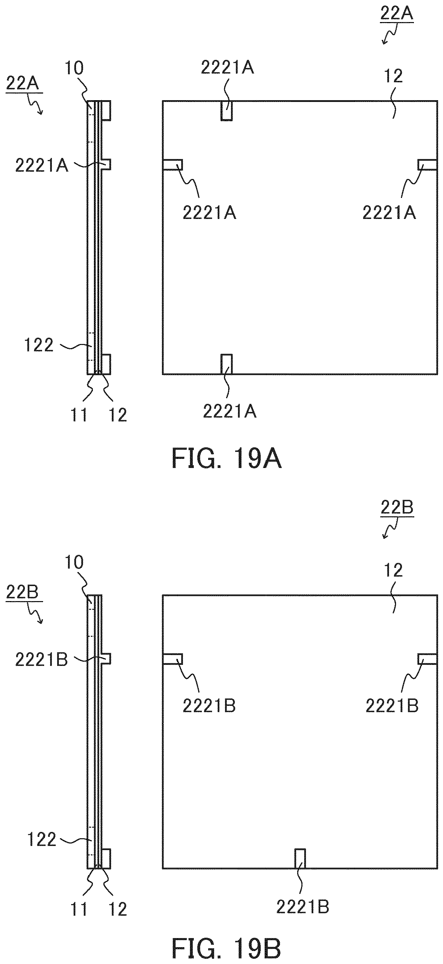

[FIGs. 19A and 19B] In FIG. 19A, the left drawing is a side view showing an exemplary marker unit according to Embodiment 16 and the right drawing is a plan view of the marker unit viewed from below. In FIG. 19B, the left drawing is a side view showing an exemplary marker unit according to Embodiment 16 and the right drawing is a plan view of the marker unit viewed from below.

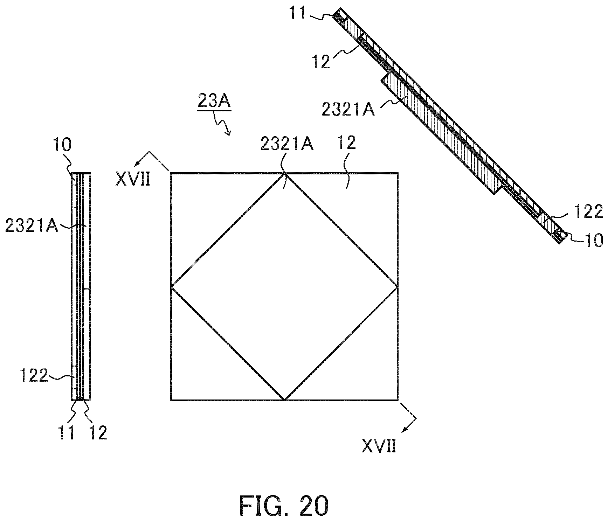

[FIG. 20] In FIG. 20, the left drawing is a side view showing an exemplary marker unit according to Embodiment 17, the middle drawing is a plan view of the marker unit viewed from below, and the upper right drawing is a cross-sectional view of the marker unit.

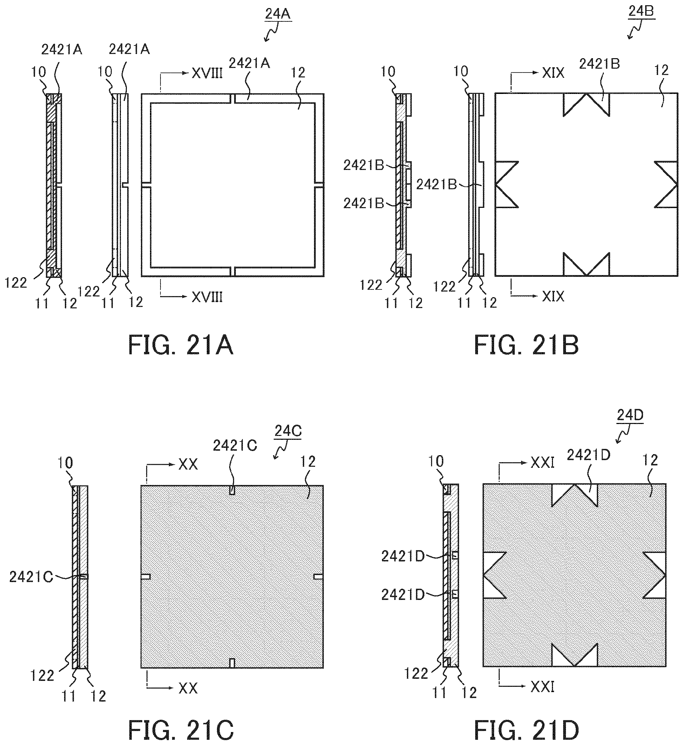

[FIGs. 21A to 21D] In FIG. 21A, the left drawing is a cross-sectional view showing an exemplary marker unit according to Embodiment 18, the middle drawing is a side view of the marker unit, and the right drawing is a plan view of the marker unit viewed from below. In FIG. 21B, the left drawing is a cross-sectional view showing an exemplary marker unit according to Embodiment 18, the middle drawing is a side view of the marker unit, and the right drawing is a plan view of the marker unit viewed from below. In FIG. 21C, the left drawing is a cross-sectional view showing an exemplary marker unit according to Embodiment 18 and the right drawing is a plan view of the marker unit viewed from below. In FIG. 21D, the left drawing is a cross-sectional view showing an exemplary marker unit according to Embodiment 18 and the right drawing is a plan view of the marker unit viewed from below.

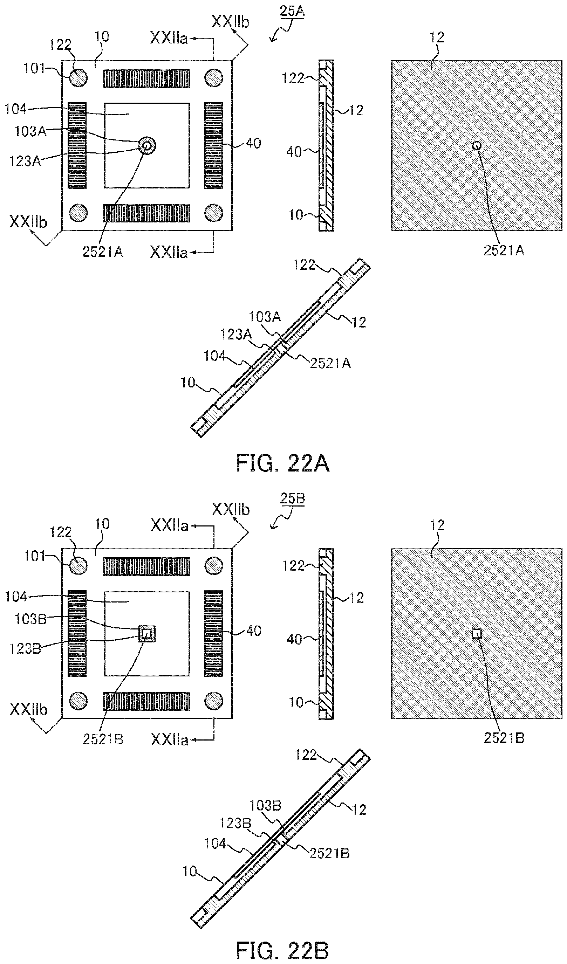

[FIGs. 22A and 22B] FIG. 22A shows an exemplary marker unit according to Embodiment 19. In FIG. 22A, the left drawing is a plan view of the marker unit viewed from above, the upper middle and lower middle views are cross-sectional views of the marker unit, and the right drawing is a plan view of the marker unit viewed from below. FIG. 22B shows an exemplary marker unit according to Embodiment 19. In FIG. 22B, the left drawing is a plan view of the marker unit viewed from above, the upper middle and lower middle drawings are cross-sectional views of the marker unit, and the right drawing is a plan view of the marker unit viewed from below.

### DESCRIPTION OF EMBODIMENTS

In the marker unit of the present invention, for example, the lower substrate detection target portion includes at least one of a marker or a detection reference portion serving as a reference in detecting the marker.

In the marker unit of the present invention, for example, the upper substrate has an upper substrate detection target portion detectable from the upper surface side of the laminate, and the upper substrate detection target portion is a marker.

In the marker unit of the present invention, for example, the positioning portion has a shape corresponding to a shape of the installation target portion.

In the marker unit of the present invention, for example, when the installation target portion of the installation target object is a protrusion, the positioning portion of the lower substrate is a recess, and when the installation target portion of the installation target object is a recess, the positioning portion of the lower substrate is a protrusion.

In the marker unit of the present invention, for example, when the installation target portion of the installation target object has a convex-shaped curved surface, the positioning portion of the lower substrate includes a plurality of protrusions.

In the marker unit of the present invention, for example, the lower substrate has two or more positioning portions.

In the marker unit of the present invention, for example, the lower substrate has one positioning portion.

In the marker unit of the present invention, for example, the lower substrate has the positioning portion on the lower surface thereof at a position corresponding to the lower substrate detection target portion.

In the marker unit of the present invention, for example, the upper substrate has a through hole, the lower substrate has the detection reference portion on the upper surface thereof at a position corresponding to the through hole of the upper substrate, and the lower substrate has the positioning portion on the lower surface thereof at a position corresponding to the detection reference portion.

In the marker unit of the present invention, for example, the lower substrate has a protrusion on the upper surface thereof at a position corresponding to the through hole of the upper substrate, and an upper surface of the protrusion serves as the detection reference portion.

In the marker unit of the present invention, for example, the lower substrate detection target portion includes a marker, and the lower substrate has the positioning portion on the lower surface thereof at a position corresponding to the marker.

In the marker unit of the present invention, for convenience, the viewing side is referred to as the "upward" or "above" and the opposite side is referred to as the "downward" or "below". Therefore, in the marker unit of the present invention, for example, the "upper substrate" is a substrate on the viewing side, and the "lower substrate" is a substrate positioned below the upper substrate.

The installation target object in which the marker unit of the present invention is to be installed is not particularly limited, and examples thereof include robots, construction equipment, clothing, and mounts attached thereto. The shape of the positioning portion in the marker unit of the present invention may be any shape as long as the installation position of the marker unit with respect to the installation target portion in the installation target object can be determined, and may be appropriately determined depending on the shape of the installation target portion in the installation target object, for example. The installation target portion in the installation target object is a site where the marker unit is to be installed.

The positioning portion of the marker unit and the installation target portion of the installation target object may have shapes that allow them to be fitted together, for example. In the case where the marker unit can be fixed to the installation target object by the positioning portion and the installation target portion, for example, the positioning portion is also referred to as a fixing portion, and the installation target portion is also referred to as a fixing target portion.

The positioning portion of the marker unit of the present invention can be designed, for example, so as to correspond to the installation target portion of the installation target object. As a specific example, for example, when the installation target portion of the installation target object is a protrusion, it is preferable that the positioning portion of the lower substrate be a recess, and the protrusion of the former and the recess of the latter correspond to each other in a one-to-one relationship. Furthermore, for example, when the installation target portion of the installation target object is a recess, it is preferable that the positioning portion of the lower substrate be a protrusion, and the recess of the former and the protrusion of the latter correspond to each other in a one-to-one relationship. As described above, the positioning portion of the marker unit of the present invention has a shape corresponding to the shape of the installation target portion of the installation target object, for example, so that the marker unit of the present invention can be easily installed by fitting the positioning portion into the installation target portion of the installation target object.

The marker unit of the present invention can be easily and stably installed even when the installation target portion has a convex-shaped curved surface, for example. Conventionally, in the case where the installation target portion of the installation target object has a curved surface instead of a flat surface, for example, when the marker unit has a plate shape, there has been a problem of stable installation. Furthermore, if the plate-shaped marker unit is forcibly installed with respect to the curved surface, the marker unit may be deformed by warpage or the like, and as a result, the function of the marker in the marker unit may be deteriorated or may not be developed. In contrast, according to the marker unit of the present invention, for example, by allowing the positioning portion to have a convex shape and bringing the convex-shaped distal end into contact with the curved surface, the marker unit can be easily and stably installed with respect to the installation target portion having the curved surface.

The marker unit is characterized in that the positioning portion is provided so as to satisfy the condition as described above, and the other configuration and the like are not limited in any way. Specifically, in the marker unit, the detection target portion, the type of the marker included in the detection target portion, the type of the various substrates, the lamination form, and the like are not limited, for example.

Embodiments of the present invention are described below with reference to the drawings. The present invention is in no way limited or restricted by the following embodiments. In the drawings, identical parts are indicated with identical reference signs. Furthermore, for convenience in explanation, the structure of each component may be appropriately simplified, and the size, the ratio, and the like of components are not limited to the conditions shown in the drawings. Hereinafter, in the laminate including the lower substrate and the upper substrate, the lower substrate side is referred to as the "downward" or "below", and the upper substrate side is referred to as the "upward" or "above".

First, an exemplary basic configuration of the marker unit according to the following embodiments is shown in FIGs. 13A to 13C. FIG. 13A is a plan view of a marker unit 1 viewed from the upper surface side, FIG. 13B is a cross-sectional view take along the line XII-XII of the marker unit 1, and FIG. 13C is a plan view of an upper substrate 10 of the marker unit 1. The marker unit 1 includes a lower substrate 12, an interposed substrate 11, and an upper substrate 10, and is a laminate in which the upper substrate 10 is disposed on the lower substrate 12 via the interposed substrate 11.

The marker unit 1 includes detection reference portions 122 and markers 20 such as variable moiré pattern (VMP) disposed between the detection reference portions 122 as detection target portions detectable from the upper surface side of the laminate. The detection reference portions 122 and the markers 20 are the lower substrate detection target portions formed by the lower substrate 12. The lower substrate detection target portion is an upper surface side region of the lower substrate 12 of the marker unit 1, and the lower substrate detection target portion on the upper surface of the lower substrate 12 is exposed to the upper surface side of the marker unit 1. In the marker unit 1, the upper substrate 10 and the interposed substrate 11 have through holes 101 and 102 at positions corresponding to the detection reference portions 122 and the markers 20. When the interposed substrate 11 and the upper substrate 10 are laminated on the lower substrate 12, the upper surface of the lower substrate 12 is exposed in regions corresponding to the through holes 101 and 102 of the upper substrate 10, thereby forming the detection reference portions 122 and the markers 20. The lower substrate 12 has, for example, circular protrusions protruding upward at positions to be the detection reference portions 122, and in the marker unit 1, the upper surface of each of the protrusions serves as the detection reference portion 122. The lower substrate 12 has, for example, continuous peak-shaped protrusions at positions to be the markers 20, and in the marker unit 1, each continuous protrusion serves as the marker 20.

In the following embodiments, the positioning portion in the lower substrate is described in detail predicated on this basic structure of the marker unit 1. In FIGs. 13A to 13C, similarly to FIG. 1A described below, a positioning portion 121 protruding downward is shown as a positioning portion in the lower substrate 12. The marker unit of the present invention, however, is not limited thereto.

The basic structure of the marker unit is not limited to the example shown in FIGs. 13A to 13C. For example, the marker unit may or may not include the interposed substrate, the marker unit may include only the marker 20 or the detection reference portion 122 as the lower substrate detection target portion, and the shape and the like of the marker 20 and the detection reference portion 122 are not limited to these examples. The marker unit of the present invention may further include a marker as the upper substrate detection target portion, for example. It is to be noted that the marker 20 is not shown in the drawings of the following embodiments.

### [Embodiment 1]

FIGs. 1A and 1B each show an exemplary marker unit of the present embodiment. In a marker unit 1 (1A and 1B) of the present embodiment, a lower substrate 12 has detection reference portions 122 on the upper surface, and the lower substrate 12 has positioning portions 121 on the lower surface at positions corresponding to the detection reference portions 122. In the marker unit 1A of FIG. 1A, the lower substrate 12 has protrusion-like positioning portions 121A. In the marker unit 1B of FIG. 1B, the lower substrate 12 has recess-like positioning portions 121B.

First, the marker unit 1A of FIG. 1A is described. In FIG. 1A, the upper drawing is a side view of the marker unit 1A and the lower drawing is a plan view of the marker unit 1A viewed from the lower substrate 12 side. As shown in FIG. 1A, the marker unit 1A includes the lower substrate 12, an interposed substrate 11, and an upper substrate 10, and the upper substrate 10 is disposed on the lower substrate 12 via the interposed substrate 11. The marker unit 1A has the detection reference portions 122 and markers (see FIGs. 13A to 13C) detectable from the upper surface side, and each marker is disposed between the detection reference portions 122 (see FIGs. 13A to 13C). The lower substrate 12 in the marker unit 1A has columnar protrusions (hereinafter, also referred to as upper surface side protrusions) protruding upward on the upper surface thereof, the upper surface of each upper surface side protrusion is a detection reference portion 122, the interposed substrate 11 and the upper substrate 10 each have through holes at positions corresponding to the detection reference portions 122, each upper surface side protrusion of the lower substrate 12 is inserted into each through hole of the interposed substrate 11 and the upper substrate 10, and the upper surface of each upper surface side protrusion of the lower substrate 12 serving as the detection reference portion 122 is exposed upward. The lower substrate 12 has columnar protrusions protruding downward on the lower surface thereof at positions corresponding to the detection reference portions 122 on the upper surface, and each protrusion serves as a positioning portion 121A. The lower substrate 12 having the upper surface side protrusions and the lower surface side protrusions is, for example, an integrally molded body. The marker unit 1A has detection reference portions 122 at four corners, respectively, and the lower surface of the lower substrate 12 has four positioning portions 121A at positions corresponding thereto.

The marker unit 1A can be installed, for example, in an installation target object having recess-like installation target portions. At this time, the shape and size of the positioning portion 121A of the marker unit 1A are not particularly limited, and can be determined depending on, for example, the shape and size of the installation target portion of the installation target object. At this time, since the marker unit 1A can be fixed to the installation target object, the shape and size of the positioning portion 121A may be determined so as to fit to the installation target portion of the installation target object, for example. The marker unit 1A can be installed in the installation target object by inserting the positioning portions 121A of the marker unit 1A into the recess-like installation target portions of the installation target object and fitting them together. The fitting between the positioning portion 12 A and the installation target portion is not particularly limited, and may be, for example, fit-in or the like.

Since the marker unit 1A has four positioning portions 121A, it is less prone to rotate, for example, after being installed in the installation target object. Therefore, it is possible to sufficiently prevent, for example, the positional deviation of the marker unit 1A after being installed in the installation target object. In the present invention, the number of the positioning portions is not particularly limited, and, for example, the marker unit preferably has two or more positioning portions from the viewpoint of such effects.

Next, the marker unit 1B of FIG. 1B is described. In FIG. 1B, the upper drawing is a cross-sectional view of the marker unit 1B taken along the line I-I and the lower drawing is a plan view of the marker unit 1B viewed from the lower substrate 12 side. As shown in FIG. 1B, the marker unit 1B is the same as the marker unit 1A of FIG. 1A except that the lower substrate 12 has recesses each having a columnar shape inside on the lower surface thereof at positions corresponding to the detection reference portions 122 on the upper surface, and each recess serves as the positioning portion 121B. The marker unit 1B has detection reference portions 122 at four corners, respectively, and the lower surface of the lower substrate 12 has four positioning portions 121B at positions corresponding thereto.

The marker unit 1B can be installed, for example, in an installation target object having protrusion-like installation target portions. At this time, the shape and size of the positioning portion 121B of the marker unit 1B can be determined, for example, depending on the shape and size of the installation target portion of the installation target object, and may be determined so as to fit to the installation target portion of the installation target object. The marker unit 1B can be installed in the installation target object by inserting the protrusion-like installation target portions of the installation target object into the positioning portions 121B of the marker unit 1B and fitting them together.

Since the marker unit 1B has four positioning portions 121B, it is less prone to rotate, for example, after being installed in the installation target object. Therefore, it is possible to sufficiently prevent, for example, the positional deviation of the marker unit 1B after being installed in the installation target object. In the present invention, the number of the positioning portions is not particularly limited, and, for example, the marker unit preferably has two or more positioning portions from the viewpoint of such effects.

In the marker unit of the present embodiment, the positioning portion is provided on the lower substrate on which the lower substrate detection target portion, which is a target to be detected from the outside, is also provided. Since the positioning portion and the lower substrate detection target portion are provided on the same lower substrate, for example, the lower substrate detection target portion, which influences the measured result if it deviates from the defined position as described above, can be disposed more accurately by the positioning portion. In addition, in the marker unit of the present embodiment, since the lower substrate has the detection reference portion serving as the lower substrate detection target portion on the upper surface and the positioning portion on the lower surface at a position corresponding thereto, the lower substrate detection target portion can be disposed still more accurately.

### [Embodiment 2]

FIGs. 2A and 2B each show an exemplary marker unit of the present embodiment. In a marker unit 2 (2A and 2B) of the present embodiment, a lower substrate 12 has positioning portions 221 at positions corresponding to the ends of the markers. In the marker unit 2A of FIG. 2A, the lower substrate 12 has protrusion-like positioning portions 221A. In the marker unit 2B of FIG. 2B, the lower substrate 12 has recess-like positioning portions 221B.

First, the marker unit 2A of FIG. 2A is described. In FIG. 2A, the upper drawing is a side view of the marker unit 2A and the lower drawing is a plan view of the marker unit 2A viewed from the lower substrate 12 side. As shown in FIG. 2A, the marker unit 2A is the same as that of Embodiment 1 except that the lower substrate 12 has columnar protrusions on the lower surface thereof at positions corresponding to the ends of the markers on the upper surface, and each protrusion serves as the positioning portion 221A. The marker unit 2A has: detection reference portions 122 as the lower substrate detection target portions at four corners, respectively; and two markers disposed in parallel between the detection reference portions 122 (see FIG. 13). The lower surface of the lower substrate 12 has four positioning portions 221A at positions corresponding to the ends of these markers. Similar to the marker unit 1A of Embodiment 1, the marker unit 2A can be installed in an installation target object having recess-like installation target portions, for example.

Since the marker unit 2A has four positioning portions 221A, it is less prone to rotate, for example, after being installed in the installation target object. Therefore, it is possible to sufficiently prevent, for example, the positional deviation of the marker unit 2A after being installed in the installation target object.

Next, the marker unit 2B of FIG. 2B is described. In FIG. 2B, the upper drawing is a cross-sectional view of the marker unit 2B taken along the line II-II and the lower drawing is a plan view of the marker unit 2B viewed from the lower substrate 12 side. As shown in FIG. 2B, the marker unit 2B is the same as the marker unit 2A of FIG. 2A except that the lower substrate 12 has recesses each having a columnar shape inside on the lower surface thereof at positions corresponding to the ends of the markers on the upper surface, and each recess serves as a positioning portion 221B. The marker unit 2B has: detection reference portions 122 as the lower substrate detection target portions at four corners, respectively; and two markers disposed in parallel between the detection reference portions 122. The lower surface of the lower substrate 12 has four positioning portions 221B at positions corresponding to the ends of these markers. Similar to the marker unit 1B of Embodiment 1, the marker unit 2B can be installed in an installation target object having protrusion-like installation target portions, for example.

Since the marker unit 2B has four positioning portions 221B, it is less prone to rotate, for example, after being installed in the installation target object. Therefore, it is possible to sufficiently prevent, for example, the positional deviation of the marker unit 2B after being installed in the installation target object.

In the marker unit of the present embodiment, the positioning portion is provided on the lower substrate on which the lower substrate detection target portion, which is a target to be detected from the outside, is also provided. Since the positioning portion and the lower substrate detection target portion are provided on the same lower substrate, for example, the lower substrate detection target portion, which influences the measured result if it deviates from the defined position as described above, can be disposed more accurately by the positioning portion. In addition, in the marker unit of the present embodiment, since the lower substrate has the markers serving as the lower substrate detection target portions on the upper surface and the positioning portions on the lower surface at positions corresponding thereto, the lower substrate detection target portions can be disposed still more accurately.

### [Embodiment 3]

FIGs. 3A and 3B each show an exemplary marker unit of the present embodiment. In a marker unit 3 (3A and 3B) of the present embodiment, a lower substrate 12 has a positioning portion 321 at the center of the lower surface thereof. In the marker unit 3A of FIG. 3A, the lower substrate 12 has a protrusion-like positioning portion 321A. In the marker unit 3B of FIG. 3B, the lower substrate 12 has a recess-like positioning portion 321B.

First, the marker unit 3A of FIG. 3A is described. In FIG. 3A, the upper drawing is a side view of the marker unit 3A and the lower drawing is a plan view of the marker unit 3A viewed from the lower substrate 12 side. As shown in FIG. 3A, the marker unit 3A is the same as that of Embodiment 1 except that the lower substrate 12 has a columnar protrusion at the center of the lower surface thereof and the protrusion serves as a positioning portion 321A. Similar to the marker unit 1A of Embodiment 1, the marker unit 3A can be installed in an installation target object having a recess-like installation target portion, for example.

Next, the marker unit 3B of FIG. 3B is described. In FIG. 3B, the upper drawing is a cross-sectional view of the marker unit 3B taken along the line III-III and the lower drawing is a plan view of the marker unit 3B viewed from the lower substrate 12 side. As shown in FIG. 3B, the marker unit 3B is the same as the marker unit 3A of FIG. 3A except that the lower substrate 12 has a recess having a columnar shape inside at the center of the lower surface thereof, and the recess serves as the positioning portion 321B. Similar to the marker unit 1B of Embodiment 1, the marker unit 3B can be installed in an installation target object having a protrusion-like installation target portion, for example.

In the marker unit of the present embodiment, the positioning portion is provided on the lower substrate on which the lower substrate detection target portion, which is a target to be detected from the outside, is also provided. Since the positioning portion and the lower substrate detection target portion are provided on the same lower substrate, for example, the lower substrate detection target portion, which influences the measured result if it deviates from the defined position as described above, can be disposed more accurately by the positioning portion.

### [Embodiment 4]

FIGs. 4A and 4B each show an exemplary marker unit of the present embodiment. In a marker unit 4 (4A and 4B) of the present embodiment, a lower substrate 12 has a positioning portion 421 at the center of the lower surface thereof. In the marker unit 4A of FIG. 4A, the lower substrate 12 has a protrusion-like positioning portion 421A. In the marker unit 4B of FIG. 4B, the lower substrate 12 has a recess-like positioning portion 421B.

First, the marker unit 4A of FIG. 4A is described. In FIG. 4A, the upper drawing is a side view of the marker unit 4A and the lower drawing is a plan view of the marker unit 4A viewed from the lower substrate 12 side. As shown in FIG. 4A, the marker unit 4A is the same as that of Embodiment 1 except that the lower substrate 12 has a columnar protrusion whose circumference is partially deleted at the center of the lower surface thereof, and the protrusion serves as the positioning portion 421A. Similar to the marker unit 1A of Embodiment 1, the marker unit 4A can be installed in an installation target object having a recess-like installation target portion, for example.

Since the positioning portion 421A is a columnar protrusion whose circumference is partially deleted, for example, the marker unit 4A is less prone to rotate when the positioning portion 421A is inserted into the installation target portion of the installation target object. Therefore, it is possible to sufficiently prevent, for example, the positional deviation of the marker unit 4A after being installed in the installation target object. In addition, for example, since the orientation of the marker unit 4A with respect to the installation target portion of the installation target object is inevitably determined from the shape of the positioning portion 421A, the marker unit can be more easily installed in the correct orientation at an intended location.

Next, the marker unit 4B of FIG. 4B is described. In FIG. 4B, the upper drawing is a cross-sectional view of the marker unit 4B taken along the line IV-IV and the lower drawing is a plan view of the marker unit 4B viewed from the lower substrate 12 side. As shown in FIG. 4B, the marker unit 4B is the same as the marker unit 4A of FIG. 4A except that the lower substrate 12 has a recess having a columnar shape inside whose circumference is partially deleted at the center of the lower surface thereof, and the recess serves as the positioning portion 421B. Similar to the marker unit 1B of Embodiment 1, the marker unit 4B can be installed in an installation target object having a protrusion-like installation target portion, for example.

Since the positioning portion 421B is a recess having a columnar shape inside whose circumference is partially deleted, for example, the marker unit 4B is less prone to rotate when the installation target portion of the installation target object is inserted into the positioning portion 421B. Therefore, it is possible to sufficiently prevent, for example, the positional deviation of the marker unit 4B after being installed in the installation target object. In addition, for example, since the orientation of the marker unit 4B with respect to the installation target portion of the installation target object is inevitably determined from the shape of the positioning portion 421B, the marker unit can be more easily installed in the correct orientation at an intended location.

In the marker unit of the present embodiment, the positioning portion is provided on the lower substrate on which the lower substrate detection target portion, which is a target to be detected from the outside, is also provided. Since the positioning portion and the lower substrate detection target portion are provided on the same lower substrate, for example, the lower substrate detection target portion, which influences the measured result if it deviates from the defined position as described above, can be disposed more accurately by the positioning portion.

### [Embodiment 5]

FIGs. 5A and 5B each show an exemplary marker unit of the present embodiment. In a marker unit 5 (5A and 5B) of the present embodiment, a lower substrate 12 has a positioning portion 521 at the center of the lower surface thereof. In the marker unit 5A of FIG. 5A, the lower substrate 12 has a protrusion-like positioning portion 521A. In the marker unit 5B of FIG. 5B, the lower substrate 12 has a recess-like positioning portion 521B.

First, the marker unit 5A of FIG. 5A is described. In FIG. 5A, the upper drawing is a side view of the marker unit 5A and the lower drawing is a plan view of the marker unit 5A viewed from the lower substrate 12 side. As shown in FIG. 5A, the marker unit 5A is the same as that of Embodiment 1 except that the lower substrate 12 has a prismatic protrusion at the center of the lower surface thereof, and the protrusion serves as the positioning portion 521A. Similar to the marker unit 1A of Embodiment 1, the marker unit 5A can be installed in an installation target object having a recess-like installation target portion, for example.

Next, the marker unit 5B of FIG. 5B is described. In FIG. 5B, the upper drawing is a cross-sectional view of the marker unit 5B taken along the line V-V, and the lower drawing is a plan view of the marker unit 5B viewed from the lower substrate 12 side. As shown in FIG. 5B, the marker unit 5B is the same as the marker unit 5A of FIG. 5A except that the lower substrate 12 has a recess having a prismatic shape inside at the center of the lower surface thereof, and the recess serves as the positioning portion 521B. Similar to the marker unit 1B of Embodiment 1, the marker unit 5B can be installed in an installation target object having a protrusion-like installation target portion, for example.

In the marker unit of the present embodiment, the positioning portion is provided on the lower substrate on which the lower substrate detection target portion, which is a target to be detected from the outside, is also provided. Since the positioning portion and the lower substrate detection target portion are provided on the same lower substrate, for example, the lower substrate detection target portion, which influences the measured result if it deviates from the defined position as described above, can be disposed more accurately by the positioning portion.

### [Embodiment 6]

FIGs. 6A and 6B each show an exemplary marker unit of the present embodiment. In a marker unit 6 (6A and 6B) of the present embodiment, a lower substrate 12 has positioning portions 621 at the diagonal corners of the lower surface. In the marker unit 6A of FIG. 6A, the lower substrate 12 has protrusion-like positioning portions 621A and 621A'. In the marker unit 6B of FIG. 6B, the lower substrate 12 has recess-like positioning portions 621B and 621B'.

First, the marker unit 6A of FIG. 6A is described. In FIG. 6A, the upper drawing is a side view of the marker unit 6A, the lower drawing is a plan view of the marker unit 6A viewed from the lower substrate 12 side, and the upper right drawing is a cross-sectional view taken along the line VI-VI of the plan view. As shown in FIG. 6A, the marker unit 6A is the same as that of Embodiment 1 except that the lower substrate 12 has two columnar protrusions at the diagonal corners of the lower surface thereof, and the protrusions serve as the positioning portions 621A and 621A'. Similar to the marker unit 1A of Embodiment 1, the marker unit 6A can be installed in an installation target object having recess-like installation target portions, for example.

Since the marker unit 6A has two positioning portions 621A and 621A', it is less prone to rotate, for example, after being installed in the installation target object. Therefore, it is possible to sufficiently prevent, for example, the positional deviation of the marker unit 6A after being installed in the installation target object.

Next, the marker unit 6B of FIG. 6B is described. In FIG. 6B, the upper drawing and the middle drawing are cross-sectional views each showing the marker unit 6B, the lower drawing is a plan view of the marker unit 6B viewed from the lower substrate 12 side, and the upper right drawing is a cross-sectional view of the marker unit 6B. Among the cross-sectional views, the upper drawing is a cross-sectional view taken along the line Via-Via, the middle drawing is a cross-sectional view taken along the line VIb-VIb, and the upper right drawing is a cross-sectional view taken along the line VIc-VIc. As shown in FIG. 6B, the marker unit 6B is the same as the marker unit 6A of FIG. 6A except that the lower substrate 12 has two recesses each having a columnar inside disposed diagonally on the lower surface thereof, and the recesses serve as the positioning portions 621B and 621B'. Similar to the marker unit 1B of Embodiment 1, the marker unit 6B can be installed in an installation target object having protrusion-like installation target portions, for example.

Since the marker unit 6B has two positioning portions 621B, 621B', it is less prone to rotate, for example, after being installed in the installation target object. Therefore, it is possible to sufficiently prevent, for example, the positional deviation of the marker unit 6B after being installed in the installation target object.

In the marker unit of the present embodiment, the positioning portion is provided on the lower substrate on which the lower substrate detection target portion, which is a target to be detected from the outside, is also provided. Since the positioning portion and the lower substrate detection target portion are provided on the same lower substrate, for example, the lower substrate detection target portion, which influences the measured result if it deviates from the defined position as described above, can be disposed more accurately by the positioning portion.

### [Embodiment 7]

FIG. 7 shows an exemplary marker unit of the present embodiment. In the marker unit 7A of the present embodiment, the lower substrate 12 has a tapered protrusion-like positioning portion 721A.

In FIG. 7, the upper drawing is a side view of the marker unit 7A, the lower drawing is a plan view of the marker unit 7A viewed from the lower substrate 12 side, and the upper right drawing is a cross-sectional view taken along the line VII-VII of the plan view. As shown in FIG. 7, the marker unit 7A is the same as that of Embodiment 1 except that the lower substrate 12 has a protrusion having a triangular planar shape and tapered in the thickness direction, and the protrusion serves as the positioning portion 721A. The positioning of the marker unit 7A can be performed, for example, by abutting (or aligning) the corner of the protrusion of the positioning portion 721A to a corresponding position of the installation target object.

In the marker unit of the present embodiment, the positioning portion is provided on the lower substrate on which the lower substrate detection target portion, which is a target to be detected from the outside, is also provided. Since the positioning portion and the lower substrate detection target portion are provided on the same lower substrate, for example, the lower substrate detection target portion, which influences the measured result if it deviates from the defined position as described above, can be disposed more accurately by the positioning portion.

### [Embodiment 8]

FIG. 8 shows an exemplary marker unit of the present embodiment. In the marker unit 8A of the present embodiment, the lower substrate 12 has a tapered protrusion-like positioning portion 821A.

In FIG. 8, the upper drawing is a side view of the marker unit 8A, the lower drawing is a plan view of the marker unit 8A viewed from the lower substrate 12 side, and the upper right drawing is a cross-sectional view taken along the line VIII-VIII of the plan view. As shown in FIG. 8, the marker unit 8A is the same as that of Embodiment 1 except that the lower substrate 12 has a protrusion having a triangular planar shape and tapered in the thickness direction, and the protrusion serves as the positioning portion 821A. The positioning of the marker unit 8A can be performed, for example, by abutting (or aligning) the corner of the protrusion of the positioning portion 821A to a corresponding position of the installation target object.

In the marker unit of the present embodiment, the positioning portion is provided on the lower substrate on which the lower substrate detection target portion, which is a target to be detected from the outside, is also provided. Since the positioning portion and the lower substrate detection target portion are provided on the same lower substrate, for example, the lower substrate detection target portion, which influences the measured result if it deviates from the defined position as described above, can be disposed more accurately by the positioning portion.

### [Embodiment 9]

FIG. 9 shows an exemplary marker unit of the present embodiment. In a marker unit 9B of the present embodiment, a lower substrate 12 has recess-like positioning portions 921B and 921B' at the diagonal corners of the lower surface.

The marker unit 9B of FIG. 9 is described. In FIG. 9, the upper drawing and the middle drawing are cross-sectional views each showing the marker unit 9B, the lower drawing is a plan view of the marker unit 9B viewed from the lower substrate 12 side, and the upper right drawing is a cross-sectional view of the marker unit 9B. Among the cross-sectional views, the upper drawing is a cross-sectional view taken along the line IXa-IXa, the middle drawing is a cross-sectional view taken along the line IXb-IXb, and the upper right drawing is a cross-sectional view taken along the line IXc-IXc. As shown in FIG. 9, the marker unit 9B is the same as the marker unit 6B of FIG. 6B except that the lower substrate 12 has a recess having a columnar shape inside whose cross section is a substantial perfect circle and a recess having an columnar shape inside whose cross section is an ellipse disposed diagonally on the lower surface thereof, and the recesses serve as the positioning portions 921B and 921B'. Similar to the marker unit 1B of Embodiment 1, the marker unit 9B can be installed in an installation target object having protrusion-like installation target portions, for example.

Since the positioning portions 921B and 921B' have different shapes, the marker unit 9B is less prone to rotate when the installation target portions of the installation target object are inserted into the positioning portions 921B and 921B'. Therefore, it is possible to sufficiently prevent, for example, the positional deviation of the marker unit 9B after being installed in the installation target object. In addition, for example, since the orientation of the marker unit 9B with respect to the installation target portion of the installation target object is inevitably determined from the shapes of the positioning portions 921B and 921B', the marker unit can be more easily installed in the correct orientation at an intended location.

As described above, one of the two positioning portions of the marker unit 9B is substantially a perfect circle, and the other is an ellipse. Thus, when two installation target portions of the installation target object are perfect circles, for example, first, one of the installation target portions is inserted into the elliptic positioning portion 921B' of the marker unit 9B, and then the other of the installation target portions is inserted into the perfect circular positioning portion 921B of the marker unit 9B, thereby allowing easier installation of the marker unit 9B.

In the marker unit of the present embodiment, the positioning portion is provided on the lower substrate on which the lower substrate detection target portion, which is a target to be detected from the outside, is also provided. Since the positioning portion and the lower substrate detection target portion are provided on the same lower substrate, for example, the lower substrate detection target portion, which influences the measured result if it deviates from the defined position as described above, can be disposed more accurately by the positioning portion.

### [Embodiment 10]

FIG. 10 shows an exemplary marker unit of the present embodiment. In a marker unit 13A of the present embodiment, a lower substrate 12 has protrusion-like positioning portions 1321A and 1321A' at the diagonal corners of the lower surface.

The marker unit 13A of FIG. 10 is described. In FIG. 10, the upper drawing is a side view of the marker unit 13A, the lower drawing is a plan view of the marker unit 13A viewed from the lower substrate 12 side, and the upper right drawing is a cross-sectional view taken along the line X-X of the plan view. As shown in FIG. 10, the marker unit 13A is the same as that of Embodiment 1 except that the lower substrate 12 has a columnar protrusion and a prismatic protrusion disposed diagonally on the lower surface thereof, and the protrusions serve as the positioning portions 1321A and 1321A'. Similar to the marker unit 1A of Embodiment 1, the marker unit 13A can be installed in an installation target object having recess-like installation target portions, for example.

Since the positioning portions 1321 A and 1321A' have different shapes, the marker unit 13A is less prone to rotate when the positioning portions 1321A and 1321A' are inserted into the installation target portions of the installation target object. Therefore, it is possible to sufficiently prevent, for example, the positional deviation of the marker unit 13A after being installed in the installation target object. In addition, for example, since the orientation of the marker unit 13A with respect to the installation target portion of the installation target object is inevitably determined from the shapes of the positioning portions 1321A and 1321A', the marker unit can be more easily installed in the correct orientation at an intended location.

In the marker unit of the present embodiment, the positioning portion is provided on the lower substrate on which the lower substrate detection target portion, which is a target to be detected from the outside, is also provided. Since the positioning portion and the lower substrate detection target portion are provided on the same lower substrate, for example, the lower substrate detection target portion, which influences the measured result if it deviates from the defined position as described above, can be disposed more accurately by the positioning portion.

### [Embodiment 11]

FIGs. 11A and 11B each show an exemplary marker unit of the present embodiment. In a marker unit 14 (14A, 14B) of the present embodiment, a lower substrate 12 has positioning portions 1421 at positions corresponding to two markers (markers 20 of FIGs. 13A to 13C) disposed along adjacent sides. In the marker unit 14A of FIG. 11A, the lower substrate 12 has protrusion-like positioning portions 1421A and 1421A'. In the marker unit 14B of FIG. 11B, the lower substrate 12 has recess-like positioning portions 1421B and 1421B'.

First, the marker unit 14A of FIG. 11A is described. In FIG. 11A, the upper drawing is a side view of the marker unit 14A and the lower drawing is a plan view of the marker unit 14A viewed from the lower substrate 12 side. As shown in FIG. 11A, the marker unit 14A is the same as that of Embodiment 1 except that the lower substrate 12 has prismatic protrusions at positions corresponding to two markers (see FIG. 13) disposed along adjacent sides, and the two protrusions serve as the positioning portions 1421A and 1421A'. Similar to the marker unit 1A of Embodiment 1, the marker unit 14A can be installed in an installation target object having recess-like installation target portions, for example.

Since the marker unit 14A has the positioning portions 1421A and 1421A' at two positions, it is less prone to rotate, for example, after being installed in the installation target object. Therefore, it is possible to sufficiently prevent, for example, the positional deviation of the marker unit 14A after being installed in the installation target object. In addition, for example, since the orientation of the marker unit 14A with respect to the installation target portion of the installation target object is inevitably determined from the combination of the shapes of the positioning portions 1421A and 1421A', the marker unit can be more easily installed in the correct orientation at an intended location.

Next, the marker unit 14B of FIG. 11B is described. In FIG. 11B, the upper drawing and the middle drawing are cross-sectional views each showing the marker unit 14B, and the lower drawing is a plan view of the marker unit 14B viewed from the lower substrate 12 side. Among the cross-sectional views, the upper drawing is a cross-sectional view taken along the line XIa-XIa and the middle drawing is a cross-sectional view taken along the line XIb-XIb. As shown in FIG. 11B, the marker unit 14B is the same as the marker unit 14A of FIG. 11A except that the lower substrate 12 has recesses each having a prismatic inside at positions corresponding to two markers (see FIG. 13) disposed along adjacent sides, and the recesses serve as the positioning portions 1421B and 1421B'. Similar to the marker unit 1B of Embodiment 1, the marker unit 14B can be installed in an installation target object having protrusion-like installation target portions, for example.

Since the marker unit 14B has the positioning portions 1421B and 1421B' at two positions, it is less prone to rotate, for example, after being installed in the installation target object. Therefore, it is possible to sufficiently prevent, for example, the positional deviation of the marker unit 14B after being installed in the installation target object. In addition, for example, since the orientation of the marker unit 14B with respect to the installation target portion of the installation target object is inevitably determined from the combination of the shapes of the positioning portions 1421B and 1421B', the marker unit can be more easily installed in the correct orientation at an intended location.

In the marker unit of the present embodiment, the positioning portion is provided on the lower substrate on which the lower substrate detection target portion, which is a target to be detected from the outside, is also provided. Since the positioning portion and the lower substrate detection target portion are provided on the same lower substrate, for example, the lower substrate detection target portion, which influences the measured result if it deviates from the defined position as described above, can be disposed more accurately by the positioning portion. In addition, in the marker unit of the present embodiment, since the lower substrate has the marker serving as the lower substrate detection target portion on the upper surface and the positioning portion on the lower surface at a position corresponding thereto, the lower substrate detection target portion can be disposed still more accurately.

### [Embodiment 12]

FIG. 12 shows an exemplary marker unit of the present embodiment. In a marker unit 15A of the present embodiment, a lower substrate 12 has a protrusion-like cross-shaped positioning portion 1521A.

In FIG. 12, the upper drawing is a side view of the marker unit 15A and the lower drawing is a plan view of the marker unit 15A viewed from the lower substrate 12 side. As shown in FIG. 12, the marker unit 15A is the same as that of Embodiment 1 except that the lower substrate 12 has a cross-shaped (X-shaped) protrusion and the protrusion serves as the positioning portion 1521A. Similar to the marker unit 1A of Embodiment 1, the marker unit 15A can be installed in an installation target object having a recess-like installation target portion, for example.

Since the positioning portion 1521A is an X-shaped protrusion, the marker unit 15A is less prone to rotate when the positioning portion 1521A is inserted into the installation target portion of the installation target object. Therefore, it is possible to sufficiently prevent, for example, the positional deviation of the positioning portion 1521A after being installed in the installation target object.

In FIG. 12, the X-shaped positioning portion 1521A has four linear protrusions linked at the center. The lengths of the respective linear protrusions are substantially the same and the angles formed by two lines are also equivalent to one another. The positioning portion 1521A is not limited thereto, and for example, the lengths of the respective lines may be different or the angles formed by two lines may be different. For example, if the marker unit has such a configuration, the orientation of the marker unit 15A with respect to the installation target portion of the installation target object is inevitably determined from the shape of the positioning portion 1521A, and the marker unit can be more easily installed in the correct orientation at an intended location.

In the marker unit of the present embodiment, the positioning portion is provided on the lower substrate on which the lower substrate detection target portion, which is a target to be detected from the outside, is also provided. Since the positioning portion and the lower substrate detection target portion are provided on the same lower substrate, for example, the lower substrate detection target portion, which influences the measured result if it deviates from the defined position as described above, can be disposed more accurately by the positioning portion.

### [Embodiment 13]

FIGs. 16A and 16B each show an exemplary marker unit of the present embodiment. In a marker unit 18 (18A, 18B) of the present embodiment, a lower substrate 12 has three positioning portions 1821 (1821A, 1821B).

First, the marker unit 18A of FIG. 16A is described. In FIG. 16A, the lower right drawing is a plan view of the marker unit 18A viewed from the lower substrate 12 side, the upper right drawing is a side view of the marker unit 18A viewed in the direction of the arrow A in the plan view, and the lower left drawing is a side view of the marker unit 18A viewed in the direction of the arrow B in the plan view. As shown in FIG. 16A, the marker unit 18A is the same as that of Embodiment 1 except that the lower substrate 12 has three columnar protrusions on the lower surface thereof and the protrusions serve as the positioning portions 1821A. Each of the positioning portions 1821 A has a curved surface at a distal end facing away from the lower substrate 12.

Similar to the marker unit 1A of Embodiment 1, the marker unit 18A can be installed in an installation target object having three recess-like installation target portions corresponding to three protrusion-like positioning portions 1821A, for example. In this case, the marker unit 18A can be installed in the installation target object by, for example, inserting each positioning portion 1821A into each recess-like installation target portion.

In addition, the marker unit 18A can be easily installed also in an installation target object having a curved surface, for example. In this case, the marker unit 18A can be installed in the installation target object by, for example, bringing the distal end of each of the three protrusion-like positioning portions 1821A into contact with the curved surface (installation target portion) of the installation target object. Specifically, in the marker unit 18A, the entire space surrounded by the positioning portions 1821A is a recess with respect to the curved surface of the installation target object, a part of the curved surface of the installation target object is inserted into the space surrounded by the positioning portions 1821A, and the distal ends of the positioning portions 1821A are brought into contact with the curved surface, thereby installing the marker unit 18A in the installation target object.

In the marker unit 18A of the present embodiment, the positioning portions 1821 is provided at a position corresponding to the curved surface of the installation target object, for example. Therefore, for example, even if the laminate constituting the marker unit 18 has a planar shape, the marker unit 18 can be installed in the installation target object at the installation target portion having the curved surface by a plurality of protrusions (positioning portions 1821).

Next, the marker unit 18B of FIG. 16B is described. In FIG. 16B, the lower right drawing is a plan view of the marker unit 18B viewed from the lower substrate 12 side, the upper right drawing is a side view of the marker unit 18B viewed in the direction of the arrow A in the plan view, and the lower left drawing is a side view of the marker unit 18B viewed in the direction of the arrow B in the plan view. The marker unit 18B is the same as the marker unit 18A of FIG. 16A except that the protrusion is conical with a downward point as an apex, and the protrusions serve as the positioning portions 1821B.

In the marker unit of the present embodiment, the positioning portion is provided on the lower substrate on which the lower substrate detection target portion, which is a target to be detected from the outside, is also provided. Since the positioning portion and the lower substrate detection target portion are provided on the same lower substrate, for example, the lower substrate detection target portion, which influences the measured result if it deviates from the defined position as described above, can be disposed more accurately by the positioning portion.

### [Embodiment 14]

FIGs. 17A and 17B each show an exemplary marker unit of the present embodiment. In a marker unit 19 (19A, 19B) of the present embodiment, a lower substrate 12 has protrusion-like positioning portions 1921 (1921A, 1921B).

First, the marker unit 19A of FIG. 17A is described. In FIG. 17A, the upper drawing is a side view of the marker unit 19A and the lower drawing is a plan view of the marker unit 19A viewed from the lower substrate 12 side. As shown in FIG. 17A, the marker unit 19A is the same as that of Embodiment 1 except that the lower substrate 12 has a pair of parallel linear protrusions on the lower surface thereof, and each protrusion serves as the positioning portion 1921A. Each of the pair of linear protrusions is a peak-shaped protrusion that is disposed along positions corresponding to the markers and detection reference portions (see FIG. 13) on the upper surface with a downward point as an apex.

The marker unit 19A can be installed in an installation target object having a pair of valley-shaped recess-like installation target portions corresponding to the pair of linear peak-shaped protrusions, respectively, for example. In this case, the marker unit 19A can be installed in the installation target object by, for example, inserting each of the pair of positioning portions 1921A into each of the valley-shaped recess-like installation target portions.

In addition, the marker unit 19A can be easily and stably installed also in an installation target object having a curved surface, for example. As the installation target object, for example, the installation target portion may have a semi-cylindrical shape. In this case, the marker unit 19A can be installed in the installation target object by, for example, bringing the respective distal ends of the pair of linear protrusions (positioning portions 1921A) into contact with the curved surface (installation target portion) of the installation target object. Specifically, in the marker unit 19A, the entire space between the pair of positioning portions 1921A is a recess with respect to the curved surface of the installation target object, a part of the curved surface of the installation target object is inserted into the space between the positioning portions 1921A, and the distal ends of the positioning portions 1921A are brought into contact with the curved surface, thereby installing the marker unit 19A in the installation target object. Preferably, the semi-cylindrical axial direction of the installation target portion and the linear direction of the positioning portion 1921 are parallel.

Next, the marker unit 19B of FIG. 17B is described. In FIG. 17B, the upper drawing is a side view of the marker unit 19B, the lower drawing is a plan view of the marker unit 19B viewed from the lower substrate 12 side, and the middle drawing is a cross-sectional view taken along the line XV-XV of the plan view. As shown in FIG. 17B, the marker unit 19B is the same as that of Embodiment 1 except that the lower substrate 12 has an annular protrusion on the lower surface thereof and the protrusion serves as the positioning portion 1921B. The annular protrusion is a peak-shaped protrusion with a downward point as an apex.

The marker unit 19B can be installed in an installation target object having an annular valley-shaped recess-like installation target portion corresponding to the annular peak-shaped protrusion, for example. In this case, the marker unit 19B can be installed in the installation target object by, for example, inserting the positioning portion 1921B into the annular recess-like installation target portion.

In addition, the marker unit 19B can be easily installed also in an installation target object having a curved surface, for example. For example, the installation target portion of the installation target object may have a spherical surface. In this case, the marker unit 19B can be installed in the installation target object by, for example, bringing the peak-shaped distal end of the peak-shaped protrusion-like positioning portion 1921B into contact with the curved surface (installation target portion) of the installation target object. Specifically, in the marker unit 19B, the entire space surrounded by the annular positioning portion 1921B is a recess with respect to the curved surface of the installation target object, a part of the curved surface of the installation target object is inserted into the space surrounded by the positioning portion 1921B, and the distal end of the positioning portion 1921B are brought into contact with the curved surface, thereby installing the marker unit 19B in the installation target object.

In the marker unit of the present embodiment, the positioning portion is provided on the lower substrate on which the lower substrate detection target portion, which is a target to be detected from the outside, is also provided. Since the positioning portion and the lower substrate detection target portion are provided on the same lower substrate, for example, the lower substrate detection target portion, which influences the measured result if it deviates from the defined position as described above, can be disposed more accurately by the positioning portion.

### [Embodiment 15]

FIGs. 18A to 18D each show an exemplary marker unit of the present embodiment. In a marker unit 21 (21A, 21B, 21C, 21D) of the present embodiment, a lower substrate 12 has protrusion-like positioning portions 2121 (2121A, 2121B, 2121C, 2121D) on the lower surface thereof.

First, the marker unit 21A of FIG. 18A is described. In FIG. 18A, the right drawing is a plan view of the marker unit 21A viewed from the lower substrate 12 side and the left drawing is a side view of the marker unit 21A. As shown in FIG. 18A, the marker unit 21A is the same as that of Embodiment 1 except that the lower substrate 12 has four prismatic protrusions on the lower surface thereof, and each protrusion serves as the positioning portion 2121A. Each of the positioning portions 2121 A is positioned at a midpoint of each of the four sides of the lower substrate 12.

Similar to the marker unit 1A of Embodiment 1, the marker unit 21A can be installed in an installation target object having four recess-like installation target portions corresponding to the four protrusion-like positioning portions 2121A, for example. In this case, the marker unit 21A can be installed in the installation target object by, for example, inserting each of the positioning portions 2121A into each of the recess-like installation target portions.

In addition, the marker unit 21A can be easily installed also in an installation target object having a curved surface, for example. In this case, the marker unit 21A can be installed in the installation target object by, for example, bringing the protrusion-like positioning portions 2121A into contact with the curved surface (installation target portion) of the installation target object. Specifically, in the marker unit 21A, the entire space surrounded by the four positioning portions 2121A is a recess with respect to the curved surface of the installation target object, a part of the curved surface of the installation target object is inserted into the space surrounded by the positioning portion 2121A, and the distal ends of the positioning portions 2121A are brought into contact with the curved surface, thereby installing the marker unit 21A in the installation target object.

Next, the marker unit 21B of FIG. 18B and the marker unit 21C of FIG. 18C are described. In each of FIGs. 18B and 18C, the right drawing is a plan view of the marker unit (21B, 21C) viewed from the lower substrate 12 side and the left drawing is a side view of the marker unit (21B, 21C). The marker units 21B and 21C are the same as the marker unit 21A of FIG. 18A except that the number of the protrusion is three or two.

Next, the marker unit 21D of FIG. 18D is described. In FIG. 18D, the right diagram is a plan view of the marker unit 21D viewed from the lower substrate 12 side, the middle diagram is a side view of the marker unit 21D, and the left diagram is a cross-sectional view taken along the line XVI-XVI. As shown in FIG. 18D, the marker unit 21D is the same as that of Embodiment 1 except that the lower substrate 12 has a cross-shaped protrusion on the lower surface thereof, and the cross-shaped protrusion serves as the positioning portion 2121D.

Similar to the marker unit 1A of Embodiment 1, the marker unit 21D can be installed in an installation target object having a cross-shaped recess-like installation target portion corresponding to the protrusion-like positioning portion 2121D, for example. In this case, the marker unit 21D can be installed in the installation target object by, for example, inserting the positioning portion 2121D into the recess-like installation target portion.

In the marker unit of the present embodiment, the positioning portion is provided on the lower substrate on which the lower substrate detection target portion, which is a target to be detected from the outside, is also provided. Since the positioning portion and the lower substrate detection target portion are provided on the same lower substrate, for example, the lower substrate detection target portion, which influences the measured result if it deviates from the defined position as described above, can be disposed more accurately by the positioning portion.

### [Embodiment 16]

FIGs. 19A and 19B each show an exemplary marker unit of the present embodiment. In a marker unit 22 (22A, 22B) of the present embodiment, a lower substrate 12 has protrusion-like positioning portions 2221 (2221A, 2221B).

First, the marker unit 22A of FIG. 19A is described. In FIG. 19A, the right drawing is a plan view of the marker unit 22A viewed from the lower substrate 12 side and the left drawing is a side view of the marker unit 22A. The marker unit 22A is the same as the marker unit 21A of the embodiment 15 except that at least one of the four protrusions serving as the positioning portions 2221A is located at a position which is not the midpoint of the side of the lower substrate 12.

In the marker unit 22A, the positions of the four positioning portions 2221A on the four sides of the lower substrate 12 are not particularly limited. For example, each positioning portion 2221A may be provided at a midpoint, a position close to any neighboring corner, or a corner. However, since an aspect in which all four positioning portions 2221A are provided at the midpoint is shown in FIG. 18A, such an aspect is excluded from the present embodiment.

Next, the marker unit 22B of FIG. 19B is described. In FIG. 19B, the right drawing is a plan view of the marker unit 22B viewed from the lower substrate 12 side and the left drawing is a side view of the marker unit 22B. The marker unit 22B is the same as the marker unit 22A of FIG. 19A except that the number of protrusions to be the positioning portion 2221B is three.

In the marker unit of the present embodiment, the positioning portion is provided on the lower substrate on which the lower substrate detection target portion, which is a target to be detected from the outside, is also provided. Since the positioning portion and the lower substrate detection target portion are provided on the same lower substrate, for example, the lower substrate detection target portion, which influences the measured result if it deviates from the defined position as described above, can be disposed more accurately by the positioning portion. In addition, in the marker unit of the present embodiment, since the lower substrate has the marker serving as the lower substrate detection target portion on the upper surface and the positioning portion on the lower surface at a position corresponding thereto, the lower substrate detection target portion can be disposed still more accurately.

### [Embodiment 17]

FIG. 20 shows an exemplary marker unit of the present embodiment. In a marker unit 23A of the present embodiment, a lower substrate 12 has a positioning portion 2321A on the lower surface thereof.

In FIG. 20, the middle drawing is a plan view of the marker unit 23A viewed from the lower substrate 12 side, the upper right drawing is a cross-sectional view of the marker unit 23A taken along the line XVII-XVII, and the left drawing is a side view of the marker unit 23A. As shown in FIG. 20, the marker unit 23A is the same as the marker unit 1A of Embodiment 1 except that the lower substrate 12 has a prismatic protrusion at the center of the lower surface thereof, and the protrusion serves as the positioning portion 2321A.

Similar to the marker unit 1A of Embodiment 1, the marker unit 23A can be installed in an installation target object having a recess-like installation target portion corresponding to the prism-shaped positioning portion 2321A, for example. In this case, the marker unit 23A can be installed in the installation target object by, for example, inserting the positioning portion 2321A into the recess-like installation target portion.

In the marker unit of the present embodiment, the positioning portion is provided on the lower substrate on which the lower substrate detection target portion, which is a target to be detected from the outside, is also provided. Since the positioning portion and the lower substrate detection target portion are provided on the same lower substrate, for example, the lower substrate detection target portion, which influences the measured result if it deviates from the defined position as described above, can be disposed more accurately by the positioning portion.

### [Embodiment 18]

FIGs. 21A to 21D each show an exemplary marker unit of the present embodiment. In a marker unit 24 (24A, 24B, 24C, 24D) of the present embodiment, a lower substrate 12 has positioning portions 2421 (2421A, 2421B, 2421C, 2421D) on the lower surface thereof. In the marker unit (24A, 24B) shown in FIGs. 21A and 21B, the lower substrate 12 has protrusion-like positioning portions (2421A, 2421B). In the marker unit (24C, 24D) shown in FIG. 21C and 21D, the lower substrate 12 has recess-like positioning portions (2421C, 2421D).

First, the marker unit 24A of FIG. 21A is described. In FIG. 21A, the right drawing is a plan view of the marker unit 24A viewed from the lower substrate 12 side, the middle drawing is a side view of the marker unit 24A, and the left drawing is a cross-sectional view of the marker unit 24A taken along the line XVIII-XVIII. As shown in FIG. 21A, the marker unit 24A is the same as that of Embodiment 1 except that the lower substrate 12 has a protrusion surrounding edges, and the protrusion serves as the positioning portion 2421A. In the marker unit 24, the protrusion-like positioning portion 2421A surrounds the edges of the lower substrate 12, and the midpoint of each of the four sides is chipped.

Similar to the marker unit 1A of Embodiment 1, the marker unit 24A can be installed in an installation target object having a recess-like installation target portion corresponding to the protrusion-like positioning portion 2421A, for example. In this case, the marker unit 24A can be installed in the installation target object by, for example, inserting the positioning portion 2421A into the recess-like installation target portion. Alternatively, the marker unit 24A can be installed in an installation target object having a protrusion-like installation target portion corresponding to a space surrounded by the protrusion-like positioning portion 2421A, for example. In this case, the marker unit 24A can be installed in the installation target object by, for example, inserting the protrusion-like installation target portion into the space surrounded by the positioning portion 2421A.

Next, the marker unit 24B of FIG. 21B is described. In FIG. 21B, the right drawing is a plan view of the marker unit 24B viewed from the lower substrate 12 side, the middle drawing is a side view of the marker unit 24B, and the left drawing is a cross-sectional view of the marker unit 24B taken along the line XIX-XIX. As shown in FIG. 21B, the marker unit 24B is the same as that of Embodiment 1 except that the lower substrate 12 has a pair of triangular prism-shaped protrusions at the midpoint of each of the four sides, and each protrusion serves as the positioning portion 2421B.

Similar to the marker unit 1A of Embodiment 1, the marker unit 24B can be installed in an installation target object having a recess-like installation target portion corresponding to the protrusion-like positioning portion 2421B, for example. In this case, the marker unit 24B can be installed in the installation target object by, for example, inserting the positioning portion 2421B into the recess-like installation target portion.

Next, the marker unit 24C of FIG. 21C is described. In FIG. 21C, the right drawing is a plan view of the marker unit 24C and the left drawing is a cross-sectional view of the marker unit 24C taken along the line XX-XX. As shown in FIG. 21C, the marker unit 24C is the same as the marker unit 24A of FIG. 21A except that the lower substrate 12 has recesses at the midpoints of the four sides and each recess serves as the positioning portion 2421C. Similar to the marker unit 1B of Embodiment 1, the marker unit 24C can be installed in an installation target object having protrusion-like installation target portions, for example.

Next, the marker unit 24D of FIG. 21D is described. In FIG. 21D, the right drawing is a plan view of the marker unit 24D and the left drawing is a cross-sectional view of the marker unit 24C taken along the line XXI-XXI. As shown in FIG. 21D, the marker unit 24D is the same as the marker unit 24A of FIG. 21A except that the lower substrate 12 has a pair of triangular prism-shaped recesses at the midpoint of each of the four sides, and each recess serves as the positioning portion 2421D. Similar to the marker unit 1B of Embodiment 1, the marker unit 24D can be installed in an installation target object having a protrusion-like installation target portion, for example.

In the marker unit of the present embodiment, the positioning portion is provided on the lower substrate on which the lower substrate detection target portion, which is a target to be detected from the outside, is also provided. Since the positioning portion and the lower substrate detection target portion are provided on the same lower substrate, for example, the lower substrate detection target portion, which influences the measured result if it deviates from the defined position as described above, can be disposed more accurately by the positioning portion.

### [Embodiment 19]

FIGs. 22A and 22B each show an exemplary marker unit of the present embodiment. In a marker unit 25 (25A, 25B) of the present embodiment, the lower substrate 12 has a through hole as a recess-like positioning portion 2521 (2521A, 2521B) at the center thereof.

First, the marker unit 25A of FIG. 22A is described. In FIG. 22A, the left drawing is a plan view of the marker unit 25A viewed from above, the upper middle drawing is a cross-sectional view of the left drawing taken along the line XXIIa-XXIIa, the lower middle drawing is a cross-sectional view of the left drawing taken along the line XXIIb-XXIIb, and the right drawing is a plan view of the marker unit 25A viewed from below.

The marker unit 25A has a two-layer structure in which the upper substrate 10 is laminated on the lower substrate 12, similarly to Variation 2 described below. The marker unit 25A includes: the detection reference portions 122, each of which is the exposed upper surface of the lower substrate 12; and the markers 40 disposed between the detection reference portions 122 as in FIG. 13 described above. In the present embodiment, the markers 40 are separate members from the lower substrate 12 and the upper substrate 10, and are disposed on the upper substrate 10.

In the marker unit 25A, the lower substrate 12 has a through hole at the center thereof, and the upper substrate 10 also has a through hole 103A at a position corresponding to the through hole of the lower substrate 12. That is, the marker unit 25A has a through hole penetrating the upper substrate 10 and the lower substrate 12 at the center thereof, and the through hole forms a positioning portion 2521A. In this manner, since both of the positioning portion 2521A and the detection reference portion 122 are formed on the lower substrate 12, the positioning of the marker unit 25A with respect to the installation target object can be performed with higher accuracy.

In the marker unit 25A, the position of the through hole, which is the positioning portion 2521A, is the center of the lower substrate 12, as described above. The center of the lower substrate 12 is, for example, a position where lines connecting two pairs of detection reference portions 122 facing each other intersect. The cross-sectional shape of the positioning portion 2521 A (the shape of the through hole) is not particularly limited, and for example, as shown in the left drawing and the right drawing of FIG. 22A, the cross-sectional shape may be circular, and as a specific example, the cross-sectional shape may be a perfect circle, an ellipse, or the like.

In the marker unit 25A, the lower substrate 12 may have a cylindrical portion 123A protruding upward around the through hole (positioning portion 2521A) as shown in the left drawing and the middle-lower drawing of FIG. 22A, for example. The upper surface of the cylindrical portion 123A is exposed to the upper substrate 10 side as shown in the left drawing and the lower middle drawing of FIG. 22A. In this manner, since the upper surface of the cylindrical portion 123A of the lower substrate 12 is exposed, the positioning of the marker unit 25A with respect to the installation target object can be performed more easily. The shape of the cylindrical portion 123A exposed to the upper substrate 10 side is, for example, an annular shape. The lower substrate 12 having the cylindrical portions 123A and the detection reference portions 122 is, for example, an integrally molded body. In the cross section of the marker unit 25A, it is preferable that the upper surface of the cylindrical portion 123A of the lower substrate 12 be at the same level as or lower than the upper surface of the detection reference portion 122 of the lower substrate 12, for example.

In the marker unit 25A, the surface of the upper substrate 10 may have, for example, an attachment region 104, in which a sticker or the like on which a two-dimensional pattern code or the like is written is to be attached, at the center thereof. Specifically, the surface of the upper substrate 10 has a recess whose center is lower than the periphery thereof as shown in the left drawing and the lower middle drawing of FIG. 22A, for example, and the bottom surface of the recess to be exposed serves as the attachment region 104. The depth of the recess in the upper substrate 10 is not particularly limited, and is determined in consideration of the thickness of the sticker to be attached, for example. When the sticker is attached to the attachment region 104 of the upper substrate 10, in the cross section of the marker unit 25A, it is preferable that the upper surface of the cylindrical portion 123A of the lower substrate 12 be at the same level as or lower than the upper surface of the sticker, for example.

For example, in the marker unit 25A, the surface of the upper substrate 10 may have recesses (attachment regions) to which the markers 40 are to be attached between the detection reference portions 122. As shown in the left drawing and the middle-upper drawing of FIG. 22A, between the detection reference portions 122, the upper substrate 10 has a recess whose center is lower than the periphery thereof, and the marker 40 is disposed in the recess. In the present invention, the form of the marker in the marker unit is not limited in any way, and the marker 40 is merely an example.

The marker unit 25A can be installed in the installation target object by, for example, inserting the positioning portion 2521A into the protrusion-like installation target portion. The protrusion-like installation target portion of the installation target object may be, for example, a rotation shaft of the installation target object. Also, the marker unit 25A can be fixed to the installation target object, for example, by placing the marker unit 25A in the installation target portion of the installation target object and then inserting a bar into the positioning portion 2521A from above. The cross-sectional shape of the positioning portion 2521 A and the cross-sectional shape of the protrusion-like installation target portion preferably correspond to each other, for example.

Next, the marker unit 25B of FIG. 22B is described. In FIG. 22B, the left drawing is a plan view of the marker unit 25B viewed from above, the upper middle drawing is a cross-sectional view of the left drawing taken along the line XXIIIa-XXIIIa, the lower middle drawing is a cross-sectional view of the left drawing taken along the line XXIIIb-XXIIIb, and the right drawing is a plan view of the marker unit 25B viewed from below.

The marker unit 25B is the same as the marker unit 25A except that the positioning portion 2521B is formed by a through hole having a polygonal cross-sectional shape, and a polygonal annular cylindrical portion 123B protruding upward is provided around the through hole. The polygon is not particularly limited, and may be a quadrangle as shown in FIG. 22B, or may be a triangle, a polygon having more sides than a quadrangle. The quadrangle is not particularly limited, and examples thereof include a square, a rectangle, and a rhombus.

The marker unit of the present invention is not limited to the above-described embodiments. As variations of the present invention, configurations other than the positioning portion in the lower substrate are described as examples. The present invention, however, is not limited to these examples.

### [Variation 1]

In the marker unit, the lower substrate detection target portion includes the detection reference portion and the marker as described above. The detection reference portion serves as a mark of a region to be detected when the marker is detected by a detection device such as a camera, for example. In the marker unit of the present invention, the number and position of the detection reference portions are not particularly limited. Each of the drawings of the embodiments shows an example in which the marker unit has four detection reference portions positioned the vicinity of four corners, respectively.

The marker unit of the present invention may further include, for example, the upper substrate detection target portion in addition to the lower substrate detection target portion. While the lower substrate detection target portion is a detection target portion formed by the upper surface of the lower substrate and exposed to the upper surface side of the laminate, the upper substrate detection target portion is a detection target portion formed by the upper substrate and detectable from the upper surface side of the laminate. The upper substrate detection target portion is, for example, a marker.

The marker unit of the present invention may include the detection reference portion and the marker as the lower substrate detection target portion and may further include the marker as the upper substrate detection target portion, for example. Also, the marker unit of the present invention may include either of the detection reference portion and the marker as the lower substrate detection target portion and may further include the marker as the upper substrate detection target portion, for example.

The marker of the lower substrate detection target portion and the marker of the upper substrate detection target portion are not particularly limited, and may be, for example, the above-described VMP marker (RAS marker), a two-dimensional pattern code, or the like. Examples of the two-dimensional pattern code include an AR marker and a QR marker. Examples of the AR marker include an ARToolKit, an ARTag, a CyberCode, and an ARToolKitPlus. In the marker unit of the present invention, the position and the number of the markers are not particularly limited. Each of the drawings for the above-mentioned embodiments shows an example in which the detection reference portion and the marker are provided as the lower substrate detection target portion, the marker is a VMP marker, and the marker is installed between the detection reference portions provided at four corners of the VMP marker.

In the marker unit of the present invention, the method for forming the marker is not particularly limited. The marker, which is the lower substrate detection target portion, can be formed, for example, as follows. That is, in a desired region of the marker unit of the present invention, for example, valley-shaped and peak-shaped irregularities are formed on the upper surface of the lower substrate, whereby the desired region can serve as the marker.

The marker, which is the upper substrate detection target portion, can be formed, for example, as follows. That is, in a desired region of the marker unit of the present invention, for example, a lens structure such as a lenticular lens is formed on the upper surface side of the upper substrate, and a pattern such as a stripe pattern or a dot pattern is formed on the lower surface side of the upper substrate, whereby the desired region can serve as the marker.

The marker as the upper substrate detection target portion is described below in detail with reference to a VMP marker.

The marker includes a lens main body having a plurality of lens units, and the plurality of lens units are arranged continuously in the planar direction. A direction in which the lens units are arranged is referred to as an arrangement direction or a width direction, and a direction perpendicular to the arrangement direction in the planar direction is referred to as a length direction.

The lens unit in the lens main body may be, for example, a cylindrical lens. The lens main body is, for example, a light-transmitting member. The light-transmitting member is not particularly limited, and may be formed of a resin, glass, or the like, for example. Examples of the resin include polycarbonate, acrylic resin (e.g., polymethyl methacrylate (PMMA)), cycloolefin polymer (COP), and cycloolefin copolymer (COC).

The lens main body includes a light-condensing portion having a function of condensing light on one surface side and a plurality of pattern forming sections on the other surface side. The pattern forming sections are, for example, lines that extend along the length direction of the lens main body, and a stripe pattern is formed by a plurality of lines or a dot pattern is formed by a plurality of dots on the other surface side of the lens main body. The plurality of pattern forming sections are projected on the upper surface side of the lens main body as an optically detectable image and can be optically detected, for example.

The pattern forming section needs only to be optically detectable, and may be a colored film, for example. The color of the colored film is not particularly limited, and may be black, for example. The colored film may be, for example, a coating film, and can be formed of a coating material. The coating material is not particularly limited, and may be a liquid coating material or a powder coating material, for example. The coating film can be formed by coating and/or solidifying the coating material, for example. The coating method may be, for example, spray coating, screen printing, or the like. The solidifying method may be, for example, drying of the liquid coating material, curing of a curable component (e.g., a radical polymerizable compound or the like) in the coating material, baking of the powder coating material, or the like.

The pattern formed by the pattern forming sections is by no means limited. For example, when the pattern is the above-described stripe pattern, the density of the color forming the stripe pattern may be uniform, or the stripe pattern may have color gradations, for example.

When the marker is placed on, for example, a white object, among light rays that have entered from the upper surface of the lens main body of the marker, the light rays that have reached the pattern forming sections are absorbed by the pattern forming sections (e.g., black colored films), and the other light rays pass through the lens main body and are reflected from the surface of the object. Accordingly, on the upper surface of the lens main body, images of the pattern forming sections (e.g., black lines) are projected onto a white background. Thus, in the marker unit, the interposed substrate on which the upper substrate having the marker is laminated functions as a reflector, and therefore, for example, when the pattern forming section of the marker is formed in black, it is preferable that the upper surface of the interposed substrate positioned below the marker be white.

FIGs. 15A and 15B each show an exemplary marker unit of the present embodiment in which the marker as the upper substrate detection target portion is provided. FIG. 15A is a top view of a marker unit 17, FIG. 15B is a cross-sectional view taken along the line XIV-XIV, and FIG. 15C is a top view of the upper substrate 30 of the marker unit 17. In the marker unit 17, a lower substrate 12 has detection reference portions 122 as the lower substrate detection target portions on the upper surface side and positioning portions 1721 on the lower surface side. In the marker unit 17, an upper substrate 30 has a region to be the above-described lens body, and the region serves as the marker 31 as the upper substrate detection target portion. The marker unit of the present embodiment is the same as that of Embodiment 1 shown in FIG. 1A except that the marker unit includes the upper substrate detection target portion instead of the marker as the lower substrate detection target portion. In addition, the marker unit of the present embodiment may be the same as those of the above-described embodiments except that the marker unit includes the upper substrate detection target portion instead of the marker as the lower substrate detection target portion.

### [Variation 2]

The marker unit may include, for example, a laminate (e.g., a two-layer structure) in which the upper substrate is laminated on the lower substrate or a laminate (e.g., a three-layer structure) in which the upper substrate is laminated on the lower substrate via an interposed substrate, as described above.

FIGs. 14A and 14B each show an exemplary marker unit of the present embodiment including a two-layer structure laminate. In a marker unit 16A of FIG. 14A, a lower substrate 12 has protrusion-like positioning portions 1621A. In a marker unit 16B of FIG. 14B, the lower substrate 12 has recess-like positioning portions 1621B. The marker unit of the present embodiment is the same as that of Embodiment 1 except that it does not include an interposed substrate. In addition, the marker unit of the present embodiment may be the same as those of the above-described embodiments except that it does not include an interposed substrate.

In the case of the two-layer structure laminate, for example, the upper substrate has through holes, and regions of the upper surface of the lower substrate corresponding to the through holes of the upper substrate (i.e., regions of the upper surface of the lower substrate exposed through the through holes) serve as the lower substrate detection target portions. In the case of the three-layer laminate, for example, the interposed substrate also has through holes at positions corresponding to the through holes of the upper substrate, and regions of the upper surface of the lower substrate exposed through the through holes of the upper substrate and the through holes of the interposed substrate serve as the lower substrate detection target portions.

The upper surface of the lower substrate may be a flat surface or may have upper surface side protrusions protruding upward, for example. In this case, the upper surface side protrusions of the lower substrate are provided at positions corresponding to the through holes of the upper substrate and the through holes of the interposed substrate, and in the laminate, the upper surface side protrusions are inserted into the through holes. The upper surface of each of the upper surface side protrusions of the lower substrate serves as the detection reference portion which is the lower substrate detection target portion. The upper surface of the upper surface side protrusion of the lower substrate may be, for example, flat with the upper surface of the upper substrate (no step therebetween), higher (protruding) than the upper surface of the upper substrate, or lower than the upper surface of the upper substrate.

When the lower substrate has the upper surface side protrusion serving as the detection reference portion, it is preferable that the upper surface side protrusion of the lower substrate, the upper substrate, and the through hole of the interposed substrate have substantially the same shape, and that the plane area of the former and the hole area of the latter are substantially the same.

The shape of the detection reference portion of the lower substrate may be, for example, a circular shape, a polygonal shape, or the like. Examples of the circular shape include a perfect circle and an ellipse, and a perfect circle is preferable. The polygonal shape may be, for example, a polygon such as a triangle or a quadrilateral, and examples of the quadrilateral include a square and a rectangle. The shapes of the through holes of the upper substrate and the interposed substrate are not particularly limited, and may be, for example, a circular shape, a polygonal shape, or the like.

In the case where the marker unit of the present invention is a two-layer structure marker unit, the combination of the colors of the lower substrate and the upper substrate is not particularly limited, and can be, for example, any combination as long as the lower substrate detection target portion and the upper substrate detection target portion (optional) can be detected. The combination of the colors of the lower substrate and the upper substrate may be, for example, as follows. The lower substrate has, for example, a black upper surface, and the upper substrate is, for example, transparent or white.

In the case where the marker unit of the present invention is a three-layer structure marker unit, the combination of the colors of the lower substrate, the interposed substrate, and the upper substrate is not particularly limited, and can be, for example, any combination as long as the lower substrate detection target portion and the upper substrate detection target portion (optional) can be detected. The colors of the lower substrate and the upper substrate are, for example, the same as those described above. The color of the interposed substrate can be appropriately set in accordance with, for example, the upper substrate, the lower substrate, the marker, and the like. The color of the upper surface of the interposed substrate is, for example, a color different from the color of the lower substrate detection target portion and the upper substrate detection target portion. Furthermore, it is preferable that the combination of the color of the upper surface of the interposed substrate, the color of the lower substrate detection target portion, and the color of the upper substrate detection target portion be, for example, a combination that easily provides the contrast. In this manner, by providing contrast by the interposed substrate, for example, the detection accuracy of the lower substrate detection target portion and the upper substrate detection target portion can be further improved, for example.

The combinations of the colors of the lower substrate, the interposed substrate, and the upper substrate may be, for example, as follows. The lower substrate has, for example, a black upper surface, the interposed substrate has, for example, a white upper surface, and the upper substrate is, for example, transparent. The interposed substrate may be also referred to as, for example, a reflective substrate with respect to the lower substrate detection target portion and the upper substrate detection target portion.

The lower substrate, the interposed substrate, and the upper substrate are, for example, resin substrates. Examples of the molding resin for the resin substrate include polycarbonate (PC), acrylic resin (e.g., polymethyl methacrylate (PMMA)), cycloolefin polymer (COP), and cycloolefin copolymer (COC). In the case of coloring the resin substrate, for example, a desired colored resin obtained by adding a coloring agent (e.g., masterbatch, dry color, or the like) of an intended color to the resin can be used as a molding material.

While the present invention has been described above with reference to illustrative embodiments, the present invention is by no means limited thereto. Various changes and variations that may become apparent to those skilled in the art may be made in the configuration and specifics of the present invention without departing from the scope of the present invention.

This application claims priority from Japanese Patent Application No. 2017-082435 filed on April 19, 2017 and Japanese Patent Application No. 2017-148305 filed on July 31, 2017. The entire subject matter of the Japanese Patent Application is incorporated herein by reference.

### Industrial Applicability

Since the marker unit of the present invention has the positioning portion as described above, the marker unit can be easily installed in an installation target object such as a robot or the like under the same condition. Thus, for example, in the installation target object, calibration for the measurement of the detection reference portion, the marker, or the like in the marker unit can be omitted every time a new marker unit is installed.

### Reference Signs List

1 to 9, 13 to 19, 21 to 25: marker unit
10, 30: upper substrate
11: interposed substrate
12: lower substrate
20, 31, 40: marker
121, 221, 321, 421, 521, 621, 721, 821, 921, 1321, 1421, 1521, 1621, 1721, 1821, 1921, 2121,2221, 2321, 2421, 2521: positioning portion
122: detection reference portion

## Claims

1. A marker unit comprising:
an upper substrate; and
a lower substrate, wherein
the upper substrate is laminated on the lower substrate to form a laminate,
the lower substrate has a lower substrate detection target portion exposed to an upper surface side of the laminate on an upper surface thereof,
the lower substrate has a positioning portion on a lower surface thereof,
the detection target portion is detectable from an upper surface side of the laminate, and
the positioning portion has a shape that determines a position with respect to an installation target portion of an installation target object in which the marker unit is to be installed.

2. The marker unit according to claim 1, wherein
the lower substrate detection target portion includes at least one of a marker or a detection reference portion serving as a reference in detecting the marker.

3. The marker unit according to claim 1 or 2, wherein
the upper substrate has an upper substrate detection target portion detectable from the upper surface side of the laminate, and
the upper substrate detection target portion is a marker.

4. The marker unit according to any one of claims 1 to 3, wherein
the positioning portion has a shape corresponding to a shape of the installation target portion.

5. The marker unit according to any one of claims 1 to 4, wherein
when the installation target portion of the installation target object is a protrusion, the positioning portion of the lower substrate is a recess, and
when the installation target portion of the installation target object is a recess, the positioning portion of the lower substrate is a protrusion.

6. The marker unit according to any one of claims 1 to 5, wherein
the lower substrate has two or more positioning portions.

7. The marker unit according to any one of claims 1 to 5, wherein
the lower substrate has one positioning portion.

8. The marker unit according to any one of claims 1 to 7, wherein
the lower substrate has the positioning portion on the lower surface thereof at a position corresponding to the lower substrate detection target portion.

9. The marker unit according to any one of claims 1 to 8, wherein
the upper substrate has a through hole,
the lower substrate has the detection reference portion on the upper surface thereof at a position corresponding to the through hole of the upper substrate, and
the lower substrate has the positioning portion on the lower surface thereof at a position corresponding to the detection reference portion.

10. The marker unit according to claim 9, wherein
the lower substrate has a protrusion on the upper surface thereof at a position corresponding to the through hole of the upper substrate, and
an upper surface of the protrusion serves as the detection reference portion.

11. The marker unit according to any one of claims 1 to 10, wherein
the lower substrate detection target portion includes a marker, and
the lower substrate has the positioning portion on the lower surface thereof at a position corresponding to the marker.
